# EUROPEAN PATENT SPECIFICATION

(11) **EP 3 385 074 B1**
(45) Date of publication and mention of the grant of the patent: **24.03.2021**
(21) Application number: 16870501.0
(22) Date of filing: 22.11.2016
(51) Int. Cl.: B32B 27/34, C08L 23/26, C08L 77/00, F16L 11/08, B32B 27/08, C08L 77/02, C08L 77/06, B32B 27/18, B32B 27/20, B32B 27/28, C08G 69/26, C08L 77/10, F16L 11/04, F16L 11/12

(54) **MULTI-LAYER STRUCTURE**
MEHRSCHICHTIGE STRUKTUR
STRUCTURE MULTICOUCHE

(30) Priority: 30.11.2015 JP 2015233084
(43) Date of publication of application: 10.10.2018
(73) Proprietor: Mitsubishi Gas Chemical Company, Inc., Tokyo 100-8324 (JP)
(72) Inventor: NAKAMURA, Jin, Hiratsuka-shi Kanagawa 254-0016 (JP); KATO, Tomonori, Hiratsuka-shi Kanagawa 254-0016 (JP); SATO, Kazuya, Hiratsuka-shi Kanagawa 254-0016 (JP)
(74) Representative: Vossius & Partner Patentanwälte Rechtsanwälte mbB
(86) International application number: PCT/JP2016/084613
(87) International publication number: WO 2017/094564

(56) References cited:
- EP-A1- 3 238 937
- WO-A1-2015/022818
- WO-A1-2015/022818
- JP-A- 2002 226 612
- JP-A- 2002 254 581
- JP-A- 2009 279 927
- JP-A- 2009 509 802
- JP-A- 2015 020 750
- US-A1- 2009 035 503
- US-A1- 2011 288 194

## Description

### TECHNICAL FIELD

The present invention relates to a multi-layer structure that has at least two types of polyamide layers. More particularly, the present invention relates to a multi-layer structure that can favorably be used as a pipe, a hose, a tube or the like for fuel transportation.

### BACKGROUND ART

In recent years, strict exhaust emission regulations have been imposed from the standpoint of preventing environmental pollution. Accordingly, high gas barrier performance has been required for structures such as pipes, hoses and tubes that are used for fuel transportation and else in order to prevent volatile components such as volatile hydrocarbon from permeating therefrom and diffusing into the air. In addition, alcohol gasoline, namely, a blend with an alcohol such as methanol and ethanol, is recently coming into practical use. Since alcohol gasoline is highly permeable and easily volatilized into the air, the gas barrier performance of various structures need to be enhanced.

Conventionally, aliphatic polyamides such as polyamide 11 and polyamide 12 were used as a material for a pipe, a hose, a tube or the like for fuel transportation due to their excellent chemical resistance. Although structures made from these aliphatic polyamides are excellent in terms of toughness, chemical resistance and flexibility, their gas barrier performance are insufficient and thus improvement has been desired.

As resins having excellent gas barrier performance, xylylene-based polyamides such as polymethaxylylene adipamide (MXD6) are known. Xylylene-based polyamides are used as a gas barrier layer for various uses. For example, Patent Literature 1 (International Publication No. 2015/022818) describes that chemical resistance and gas barrier performance can be enhanced by laminating a layer containing two types of xylylene-based polyamides on a layer made from polyamide 11 or polyamide 12. Moreover, Patent Literature 2 (Japanese Unexamined Patent Application Publication No. 2004-203012) describes that an alcohol gasoline permeation preventing property, heat resistance and else can be satisfied by laminating a layer made from either or both of polyamide 11 and polyamide 12 with a layer made from polyamide 9T.

However, since xylylene-based polyamides and semi-aromatic polyamides such as polyamide 9T have low flexibility, a structure having a gas barrier layer containing a xylylene-based polyamide and a semi-aromatic polyamide such as polyamide 9T has unsatisfactory flexibility and thus impractical for use.

### CITATION LIST

### Patent Literatures

Patent Literature 1: International Publication No. 2015/022818
Patent Literature 2: Japanese Unexamined Patent Application Publication No. 2004-203012

### SUMMARY OF INVENTION

### Technical Problem

Under such circumstances, there have been needs in providing a multi-layer structure with good flexibility and excellent chemical resistance and gas barrier performance. In particular, there have been needs in providing a multi-layer structure that can favorably be used as a pipe, a hose, a tube and the like for fuel transportation.

### Solutions to Problem

The present inventors have gone through keen studies in view of the above-described problem, and as a result of which found that a multi-layer structure obtained by laminating a polyamide layer (B) made from a composition containing a xylylene-based polyamide, a modified polyolefin and an aliphatic polyamide at predetermined proportions on a polyamide layer (A) made from an aliphatic polyamide such as polyamide 11 and polyamide 12 can satisfy flexibility, chemical resistance and gas barrier performance at high levels, thereby accomplishing the present invention.

Specifically, the present invention relates to the following multi-layer structure.
[1] A multi-layer structure comprising a polyamide layer (A) and a polyamide layer (B), wherein:
   the polyamide layer (A) is made from a polyamide composition (A) comprising at least one polyamide (A1) selected from the group consisting of a polyamide (a1) containing at least either one of a C10-C12 lactam-derived constituent unit and a C10-C12 aminocarboxylic acid-derived constituent unit, and a polyamide (a2) containing a C6-C12 aliphatic diamine-derived constituent unit and a C10-C12 aliphatic dicarboxylic acid-derived constituent unit; and
   the polyamide layer (B) is made from a polyamide composition (B) comprising: a polyamide (B1) including a diamine unit containing 70 mol% or more of a xylylenediamine-derived constituent unit and a dicarboxylic acid unit containing 70 mol% or more of a C4-C12 aliphatic dicarboxylic acid-derived constituent unit; a modified polyolefin (B2); and at least one polyamide (B3) selected from the group consisting of a polyamide (bl) containing at least either one of a C6-C12 lactam-derived constituent unit and a C6-C12 aminocarboxylic acid-derived constituent unit, and a polyamide (b2) containing a C6-C12 aliphatic diamine-derived constituent unit and a C10-C12 aliphatic dicarboxylic acid-derived constituent unit, where the content of the modified polyolefin (B2) is 5-15 parts by mass and the content of the polyamide (B3) is 5-20 parts by mass per 100 parts by mass of the polyamide (B1).
[2] The multi-layer structure according to [1], wherein the C4-C12 aliphatic dicarboxylic acid is adipic acid, sebacic acid or a mixture thereof.
[3] The multi-layer structure according to either one of [1] and [2], wherein the xylylenediamine is meta-xylylenediamine, para-xylylenediamine or a mixture thereof.
[4] The multi-layer structure according to any one of [1]-[3], wherein the polyamide (B1) is polyxylylene adipamide, polyxylylene sebacamide or a mixture thereof.
[5] The multi-layer structure according to any one of [1]-[4], wherein the polyamide (B1) is a mixture of polyxylylene adipamide and polyxylylene sebacamide, where the mass ratio of polyxylylene adipamide and polyxylylene sebacamide (polyxylylene adipamide: polyxylylene sebacamide) is 55:45-85:15.
[6] The multi-layer structure according to any one of [1]-[5], wherein the modified polyolefin (B2) is at least one selected from the group consisting of maleic anhydride-modified polyethylene, a maleic anhydride-modified α-olefin copolymer and a polyolefin graft-modified with an aliphatic polyamide.
[7] The multi-layer structure according to any one of [1]-[6], wherein the polyamide (B3) is at least one selected from the group consisting of polyamide 6, polyamide 6,12, polyamide 10,10, polyamide 11 and polyamide 12.
[8] The multi-layer structure according to any one of [1]-[7], wherein the polyamide composition (A) further comprises a modified polyolefin (A2).
[9] The multi-layer structure according to any one of [1]-[8], wherein the polyamide composition (B) further comprises a carbon nanotube (B4).
[10] The multi-layer structure according to [9], wherein the content of the carbon nanotube (B4) is 1.5-10 parts by mass per 100 parts by mass of the polyamide (B1).
[11] The multi-layer structure according to any one of [1]-[10], which is in a form of a pipe, a hose or a tube.
[12] The multi-layer structure according to any one of [1]-[11], which is used for fuel transportation.

### ADVANTAGEOUS EFFECTS OF INVENTION

In a preferable aspect of the present invention, a multi-layer structure with good flexibility and excellent chemical resistance and gas barrier performance can be provided. The multi-layer structure of the present invention can favorably be used as a piping material for fuel transportation, a fuel storage vessel or the like. In particular, the multi-layer structure of the present invention can favorably be used as a pipe, a hose or a tube for fuel transportation.

### DESCRIPTION OF EMBODIMENTS

Hereinafter, preferable embodiments of the multi-layer structure of the present invention will be described specifically.

The multi-layer structure of the present invention is a multi-layer structure comprising a polyamide layer (A) and a polyamide layer (B), wherein:
the polyamide layer (A) is made from a polyamide composition (A) comprising at least one polyamide (A1) selected from the group consisting of a polyamide (a1) containing at least either one of a C10-C12 lactam-derived constituent unit and a C10-C12 aminocarboxylic acid-derived constituent unit, and a polyamide (a2) containing a C6-C12 aliphatic diamine-derived constituent unit and a C10-C12 aliphatic dicarboxylic acid-derived constituent unit; and
the polyamide layer (B) is made from a polyamide composition (B) comprising: a polyamide (B1) including a diamine unit containing 70 mol% or more of a xylylenediamine-derived constituent unit and a dicarboxylic acid unit containing 70 mol% or more of a C4-C12 aliphatic dicarboxylic acid-derived constituent unit; a modified polyolefin (B2); and at least one polyamide (B3) selected from the group consisting of a polyamide (b1) containing at least either one of a C6-C12 lactam-derived constituent unit and a C6-C12 aminocarboxylic acid-derived constituent unit, and a polyamide (b2) containing a C6-C12 aliphatic diamine-derived constituent unit and a C10-C12 aliphatic dicarboxylic acid-derived constituent unit, where the content of the modified polyolefin (B2) is 5-15 parts by mass and the content of the polyamide (B3) is 5-20 parts by mass per 100 parts by mass of the polyamide (B1).

The multi-layer structure of the present invention can have excellent chemical resistance and gas barrier performance without lacking flexibility by having a polyamide layer (A) comprising a composition containing a predetermined aliphatic polyamide, and a polyamide layer (B) comprising a composition containing a xylylene-based polyamide, a modified polyolefin and a predetermined aliphatic polyamide at predetermined proportions. Hereinafter, the multi-layer structure of the present invention will be described specifically.

### (1) Polyamide layer (A)

The polyamide layer (A) is made from a polyamide composition (A) comprising at least one polyamide (A1) selected from the group consisting of a polyamide (a1) containing at least either one of a C10-C12 lactam-derived constituent unit and a C10-C12 aminocarboxylic acid-derived constituent unit, and a polyamide (a2) containing a C6-C12 aliphatic diamine-derived constituent unit and a C10-C12 aliphatic dicarboxylic acid-derived constituent. Hereinafter, polyamides (a1) and (a2) will be described.

### [Polyamide (al)]

The polyamide (a1) comprises at least either one of a C10-C12 lactam-derived constituent unit and a C10-C12 aminocarboxylic acid-derived constituent unit.

The carbon numbers of the lactam-derived constituent unit and the aminocarboxylic acid-derived constituent unit are preferably 11-12 in terms of flexibility and availability.

The C10-C12 lactam-derived constituent unit and the C10-C12 aminocarboxylic acid-derived constituent unit generally consist of a ω-aminocarboxylic acid unit represented by General formula (I) below.

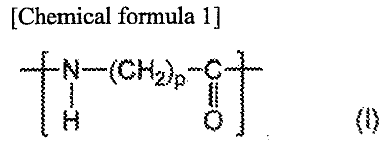

In General formula (I), p represents an integer of 9-11, preferably 10-11.

Specific examples of a compound that constitutes the C10-C12 lactam-derived constituent unit include decanelactam, undecanelactam and dodecanelactam. In addition, examples of a compound that constitutes the C10-C12 aminocarboxylic acid-derived constituent unit include 10-aminodecanoic acid, 11-aminoundecanoic acid and 12-aminododecanoic acid.

The polyamide (a1) is not solely limited to constituent units derived from C10-C12 lactam or C10-C12 aminocarboxylic acid, as long as it has these constituent units as the main components. Herein, while the phrase "have...as the main components" is not particularly limited and intends to allow other constituent unit to be contained within a range that does not infer the effect of the present invention, at least either one of the C10-C12 lactam constituent unit and the C10-C12 aminocarboxylic acid-derived constituent unit as a monomer, for example, accounts for 60 mol% or more, preferably 80-100 mol%, and more preferably 90-100 mol% among the constituent units of polyamide (a1).

Examples of other constituent units of the polyamide (a1) include lactams other than the C10-C12 lactams, aminocarboxylic acids other than the C10-C12 aminocarboxylic acids, and a nylon salt-derived constituent unit made from diamine and dicarboxylic acid.

Specific examples of lactams other than the C10-C12 lactams include three- or higher-membered lactams. Specifically, ε-caprolactam, ω-enantholactam, α-pyrrolidone, α-piperidone and the like can be exemplified. Moreover, examples of aminocarboxylic acids other than the C10-C12 aminocarboxylic acids include 6-aminocaproic acid, 7-aminoheptanoic acid and 9-aminononanoic acid.

Examples of diamine that constitutes a nylon salt include aliphatic diamines such as ethylenediamine, propylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, 1,13-tridecanediamine, 1,14-tetradecanediamine, 1,15-pentadecanediamine, 1,16-hexadecanediamine, 1,17-heptadecanediamine, 1,18-octadecanediamine, 1,19-nonadecanediamine, 1,20-eicosanediamine, 2-methyl-1,5-pentanediamine, 3-methyl-1,5-pentanediamine, 2-methyl-1,8-octanediamine, and 2,2,4- or 2,4,4-trimethylhexanediamine; alicyclic diamines such as 1,3- or 1,4-cyclohexanediamine, 1,3- or 1,4-bis(aminomethyl)cyclohexane, bis(4-aminocyclohexyl)methane, 2,2-bis(4-aminocyclohexyl)propane, bis(3-methyl-4-aminocyclohexyl)methane, 2,2-bis(3-methyl-4-aminocyclohexyl)propane, 5-amino-2,2,4-trimethylcyclopentanemethanamine, 5-amino-1,3,3-trimethylcyclohexanemethanamine, bis(aminopropyl)piperazine, bis(aminoethyl)piperazine, norbornane dimethylamine, and tricyclodecane dimethylamine; and diamines having an aromatic ring such as para-xylylenediamine, meta-xylylenediamine.

Examples of dicarboxylic acid that constitutes a nylon salt include aliphatic dicarboxylic acids such as adipic acid, pimelic acid, suberic acid, azelaic acid, sebacic acid, 1,9-nonanedicarboxylic acid, 1,10-decanedicarboxylic acid, 1,11-undecanedicarboxylic acid, and 1,12-dodecanedicarboxylic acid; alicyclic dicarboxylic acids such as 1,3- or 1,4-cyclohexanedicarboxylic acid, dicyclohexanemethane-4,4'-dicarboxylic acid, and norbomanedicarboxylic acid; and aromatic dicarboxylic acids such as isophthalic acid, terephthalic acid, and 1,4-, 2,6- or 2,7-naphthalene dicarboxylic acid.

As the polyamide (a1), polyamide 11 that has at least either one of an undecanelactam-derived constituent unit and a 11-aminoundecanoic acid-derived constituent unit as a main component, polyamide 12 that has at least either one of a dodecanelactam-derived constituent unit and a 12-aminododecanoic acid-derived constituent unit, or a mixture of said polyamides 11 and 12 is preferable .

The polyamide (a1) can be obtained by polymerizing the above-described constituent monomers, and can be obtained by ring-opening polymerization of lactams or by polycondensation of aminocarboxylic acids.

The method of this polymerization is not particularly limited and any known method such as melt polymerization, solution polymerization or solid-phase polymerization may be employed. These polymerization methods may be employed alone or employed in a suitable combination. As the production apparatus, a known polyamide production apparatus, for example, a batch-type reaction vessel, a continuous single- or multiple-tank reactor, a continuous tubular reactor, a kneading/reaction extruder such as a single-screw kneading extruder or a twin-screw kneading extruder, or the like may be used.

A small amount of monoamine, monocarboxylic acid or the like may be added as a molecular weight regulator upon polycondensation of the polyamide (a1).

Furthermore, in order to achieve an effect of promoting the amidation reaction and an effect of preventing coloring upon polycondensation, a known additive such as a phosphorus atom-containing compound, an alkali metal compound or an alkaline-earth metal compound may be added upon polycondensation of the polyamide (a1).

The melting point Tm of the polyamide (a1) is preferably 160-240°C, more preferably 165-230°C and still more preferably 170-220°C from the standpoints of heat resistance and melt moldability.

Herein, the melting point is determined by performing DSC measurement (differential scanning calorimetry) with a differential scanning calorimeter [from Shimadzu Corporation, trade name: DSC-60] at a temperature raising rate of 10°C/min under a nitrogen atmosphere.

### [Polyamide (a2)]

The polyamide (a2) includes a C6-C12 aliphatic diamine-derived constituent unit and a C10-C12 aliphatic dicarboxylic acid-derived constituent unit.

A compound that may constitute the diamine unit of the polyamide (a2) is a C6-C12 aliphatic diamine. The aliphatic group of the C6-C12 aliphatic diamine is a linear or branched bivalent aliphatic hydrocarbon group, which may either be a saturated aliphatic group or an unsaturated aliphatic group, but usually a linear saturated aliphatic group. The carbon number of the aliphatic group is preferably 8-12, more preferably 9-12 and more preferably 10-12.

Examples of the compound that may constitute the diamine unit of the polyamide (a2) include, but not limited to, aliphatic diamines such as hexamethylenediamine, heptamethylenediamine, octamethylenediamine, nonamethylenediamine, decamethylenediamine, undecamethylenediamine and dodecamethylenediamine. They may be used alone or two or more types of them may be used in combination.

From the standpoint of flexibility and else, the diamine unit of the polyamide (a2) contains a C6-C12 aliphatic diamine-derived constituent unit for preferably 70 mol% or more, more preferably 80-100 mol% and still more preferably 90-100 mol%.

Accordingly, the diamine unit of the polyamide (a2) may consist solely of a C6-C12 aliphatic diamine-derived constituent unit or may additionally contain a diamine-derived constituent unit other than the C6-C12 aliphatic diamines.

Examples of the diamine other than the C6-C12 aliphatic diamines contained in the polyamide (a2) include, but not limited to, alicyclic diamines such as ethylenediamine, propylenediamine, tetramethylenediamine, pentamethylenediamine, 1,3- or 1,4-bis(aminomethyl)cyclohexane, 1,3- or 1,4-diaminocyclohexane, bis(4-aminocyclohexyl)methane, 2,2-bis(4-aminocyclohexyl)propane, bis(aminomethyl)decalin and bis(aminomethyl)tricyclodecane; diamines having an aromatic ring such as bis(4-aminophenyl)ether, para-phenylenediamine and bis(aminomethyl)naphthalene.

The compound that may constitute the dicarboxylic acid unit of the polyamide (a2) is a C10-C12 aliphatic dicarboxylic acid, examples being sebacic acid, 1,9-nonanedicarboxylic acid and 1,10-decanedicarboxylic acid. They may be used alone or two or more types of them may be used in combination.

In terms of better flexibility, the dicarboxylic acid unit of the polyamide (a2) contains a C10-C12 aliphatic dicarboxylic acid-derived constituent unit for preferably 70 mol% or more, more preferably 80-100 mol% and still more preferably 90-100 mol%.

Accordingly, the dicarboxylic acid unit of the polyamide (a2) may consist solely of a C10-C12 aliphatic dicarboxylic acid-derived constituent unit or may additionally contain a dicarboxylic acid-derived constituent unit other than the C10-C12 aliphatic dicarboxylic acids.

Examples of the dicarboxylic acid other than the C10-C12 aliphatic dicarboxylic acids of the polyamide (a2) include, but not limited to, aliphatic carboxylic acids with a carbon number of 9 or less or 13 or higher such as succinic acid, glutaric acid, adipic acid, pimelic acid, suberic acid, azelaic acid, 1,11-undecanedicarboxylic acid, 1,12-dodecanedicarboxylic acid, 1,13-tridecanedicarboxylic acid and 1,14-tetradecanedicarboxylic acid; and aromatic dicarboxylic acids such as terephthalic acid, isophthalic acid and 2,6-naphthalene dicarboxylic acid.

From the standpoint of acquiring good flexibility, the polyamide (a2) is preferably a polyamide that has a constituent unit derived from an aliphatic diamine with a carbon number of 10 or higher as the diamine unit, i.e., the main component, and particularly preferably, polyamide 10,10 that has both C10 aliphatic diamine-derived constituent unit and C10 aliphatic dicarboxylic acid-derived constituent unit as the main components, polyamide 10,12 that has both C10 aliphatic diamine-derived constituent unit and C12 aliphatic dicarboxylic acid-derived constituent unit as the main components, or a mixture thereof.

The polyamide (a2) can be obtained by polycondensating a diamine component and a dicarboxylic acid component. For example, the polyamide can be produced by a method in which polymerization is carried out in a molten state by increasing the temperature of a salt made of a diamine component and a dicarboxylic acid component under pressure in the presence of water while removing the added water and condensation water. Alternatively, the polyamide can be produced by a method in which a diamine component is added directly to a dicarboxylic acid component in a molten state, which is subjected to polycondensation under normal pressure. In this case, the diamine component is continuously added to the dicarboxylic acid component to keep the reaction system in a homogeneous liquid state, during which the polycondensation is allowed to proceed while increasing the temperature of the reaction system such that the reaction temperature does not fall below the melting point of the generated oligoamide and polyamide.

A small amount of monoamine, monocarboxylic acid or the like may be added as a molecular weight regulator upon polycondensating the polyamide (a2).

Furthermore, in order to achieve an effect of promoting the amidation reaction and an effect of preventing coloring upon polycondensating the polyamide (a2), a known additive such as a phosphorus atom-containing compound, an alkali metal compound or an alkaline-earth metal compound may be added.

In terms of heat resistance and melt moldability, the melting point Tm of the polyamide (a2) is preferably 160-240°C, more preferably 165-230°C and still more preferably 170-220°C.

The polyamide (A1) is one or more selected from the group consisting of said polyamide (a1) and polyamide (a2). The polyamide (A1) may be either one of polyamide (a1) or polyamide (a2), or may be a combination of polyamide (a1) and polyamide (a2).

For example, the polyamide (A1) is preferably any one or more selected from the group consisting of polyamide 11, polyamide 12, polyamide 10,10 and polyamide 10,12, and more preferably polyamide 11, polyamide 12 or a mixture thereof.

The polyamide composition (A) that constitutes the polyamide layer (A) may be any composition as long as it contains the above-described polyamide (A1). While the content of the polyamide (A1) in the polyamide composition (A) is not particularly limited, it is preferably 60 mass% or more, more preferably 70 mass% or more, and still more preferably 80 mass% or more from the standpoint of flexibility.

In one embodiment of the present invention, the polyamide composition (A) may further contain a modified polyolefin (A2). Examples of the modified polyolefin (A2) include those that are the same as the modified polyolefin (B2) described later.

From the standpoints of elastic modulus, flexibility and impact resistance, examples of the modified polyolefin (A2) that can particularly favorably be used with the present invention include maleic anhydride-modified α-olefin copolymers such as maleic anhydride-modified polyethylene and a maleic anhydride-modified ethylene-propylene copolymer; and polyolefins graft-modified with an aliphatic polyamide. The modified polyolefins (A2) can be used alone or two or more can be used in combination.

The content of the modified polyolefin (A2) in the polyamide composition (A) is preferably 0-40 mass%, more preferably 0-30 mass%, and still more preferably 0-20 mass%.

Moreover, the polyamide composition (A) may contain various additives within a range that does not impair the purpose of the present invention. Examples of various additives include a plasticizer such as benzenesulfonic acid alkylamide, toluenesulfonic acid alkylamide or hydroxybenzoic acid alkylester, a conductive filler such as carbon black-, graphite- or metal-containing filler, an antioxidant, a heat stabilizer, an ultraviolet absorber, a light stabilizer, a lubricant, an inorganic filler, an antistatic agent, a flame retardant, a crystallization accelerator and an impact resistance improving agent. The content of such additives in the polyamide composition (A) is preferably 20 mass% or less, more preferably 15 mass% or less, and still more preferably 12 mass% or less.

The polyamide composition (A) can be prepared by mixing the polyamide (A1), if necessary, a modified polyolefin (A2) and various additives, and melt kneading the resulting mixture with an extruder.

### (2) Polyamide layer (B)

The polyamide layer (B) is made from a polyamide composition (B) comprising: a polyamide (B1) including a diamine unit containing 70 mol% or more of a xylylenediamine-derived constituent unit and a dicarboxylic acid unit containing 70 mol% or more of a C4-C12 aliphatic dicarboxylic acid-derived constituent unit; a modified polyolefin (B2); and at least one polyamide (B3) selected from the group consisting of a polyamide (b1) containing at least either one of a C6-C12 lactam-derived constituent unit and a C6-C12 aminocarboxylic acid-derived constituent unit, and a polyamide (b2) containing a C6-C12 aliphatic diamine-derived constituent unit and a C10-C12 aliphatic dicarboxylic acid-derived constituent unit, where the content of the modified polyolefin (B2) is 5-15 parts by mass and the content of the polyamide (B3) is 5-20 parts by mass per 100 parts by mass of the polyamide (B1). Moreover, if conductivity is to be imparted to the polyamide layer (B), the polyamide composition (B) may further contain a carbon nanotube (B4). Hereinafter, each of the components constituting the polyamide composition (B) will be described.

### [Polyamide (B1)]

The polyamide (B1) includes a diamine unit containing 70 mol% or more of a xylylenediamine-derived constituent unit and a dicarboxylic acid unit containing 70 mol% or more of a C4-C12 aliphatic dicarboxylic acid-derived constituent unit.

From the standpoints of imparting excellent gas barrier performance and moldability, the diamine unit that constitutes the polyamide (B1) contains the xylylenediamine-derived constituent unit for 70 mol% or more, preferably 80 mol% or more, more preferably 90 mol% or more, and still more preferably 95 mol% or more in the diamine unit.

Examples of the xylylenediamine include ortho-xylylenediamine, meta-xylylenediamine and para-xylylenediamine. These may be used alone or two or more of them may be used in combination. According to the present invention, meta-xylylenediamine, para-xylylenediamine or a mixture thereof is preferably used.

In a case where a mixture of meta-xylylenediamine and para-xylylenediamine is to be used, the mass ratio of meta-xylylenediamine and para-xylylenediamine (meta-xylylenediamine: para-xylylenediamine) is preferably in a range of 10:90-99:1, more preferably 50:50-99:1, and still more preferably 65:35-99:1.

The polyamide (B1) may further contain a diamine unit other than the xylylenediamine-derived constituent unit. Examples of such diamine unit include diamine units derived from compounds like: aliphatic diamines such as tetramethylenediamine, pentamethylenediamine, 2-methyl-1,5-pentanediamine, hexamethylenediamine, heptamethylenediamine, octamethylenediamine, nonamethylenediamine, decamethylenediamine, dodecamethylenediamine, and 2,2,4- or 2,4,4-trimethylhexamethylenediamine; alicyclic diamines such as 1,3- or 1,4-bis(aminomethyl)cyclohexane, 1,3- or 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having aromatic rings such as bis(4-aminophenyl)ether, para-phenylenediamine, para-xylylenediamine and bis(aminomethyl)naphthalene. These may be used alone or two or more of them may be used in combination.

From the standpoints of imparting flexibility as well as suitable crystalline property, the dicarboxylic acid unit that constitutes the polyamide (B1) contains a C4-C12 aliphatic dicarboxylic acid-derived constituent unit for 70 mol% or more, preferably 80 mol% or more, more preferably 90 mol% or more, and still more preferably 95 mol% or more in the dicarboxylic acid unit.

The C4-C12 aliphatic dicarboxylic acid is preferably a C4-C12 linear aliphatic α,ω-dicarboxylic acid. Examples of the C4-C12 linear aliphatic α,ω-dicarboxylic acid include succinic acid, glutaric acid, adipic acid, pimelic acid, suberic acid, azelaic acid, sebacic acid, 1,10-decanedicarboxylic acid, 1,11-undecanedicarboxylic acid, and 1,12-dodecanedicarboxylic acid. These may be used alone or two or more of them may be used in combination.

Among them, adipic acid, sebacic acid or a mixture thereof is preferably used from the standpoint of availability as well as excellent gas barrier performance. When a mixture of adipic acid and sebacic acid is to be used, the mass ratio of adipic acid and sebacic acid (adipic acid: sebacic acid) is in a range of preferably 55:45-85:15, more preferably 60-40:80-20, and still more preferably 65-35:80-20.

The polyamide (B1) may contain a dicarboxylic acid unit other than the C4-C12 aliphatic dicarboxylic acid-derived constituent unit.

Examples of the dicarboxylic acid unit other than the C4-C12 aliphatic dicarboxylic acid-derived constituent unit include aliphatic dicarboxylic acids with a carbon number of 3 or less such as oxalic acid and malonic acid; aliphatic carboxylic acids with a carbon number of 13 or more such as 1,11-undecanedicarboxylic acid, 1,12-dodecanedicarboxylic acid, 1,13-tridecanedicarboxylic acid, and 1,14-tetradecanedicarboxylic acid; and aromatic dicarboxylic acids such as terephthalic acid, isophthalic acid, and 2,6-naphthalene dicarboxylic acid. These may be used alone or two or more of them may be used in combination.

Examples of the polyamide (B1) that can particularly favorably be used with the present invention include polyxylylene adipamide, isophthalic acid-copolymerized polyxylylene adipamide, polyxylylene sebacamide and polyxylylene dodecanamide. Among them, the polyamide (B1) is preferably polyxylylene adipamide (polymethaxylylene adipamide, poly-para-xylylene adipamide), polyxylylene sebacamide (polymethaxylylene sebacamide, poly-para-xylylene sebacamide) or a mixture thereof.

In a case where the polyamide (B1) is a mixture of polyxylylene adipamide and polyxylylene sebacamide, the mass ratio of polyxylylene adipamide and polyxylylene sebacamide (polyxylylene adipamide: polyxylylene sebacamide) is in a range of preferably 55:45-85:15, more preferably 60:40-80:20, and still more preferably 65:35-80:20. By using a mixture of polyxylylene adipamide and polyxylylene sebacamide as the polyamide (B1), excellent adhesiveness between the polyamide layer (A) and the polyamide layer (B) of a multi-layer structure and also excellent gas barrier performance of the multi-layer structure can be acquired.

The polyamide (B1) can be produced by polycondensation of a diamine component that can constitute the above-described diamine unit and a dicarboxylic acid component that can constitute the above-described dicarboxylic acid unit. This production method is similar to that described for the polyamide (a2). The polymerization degree can be controlled by adjusting the polycondensation conditions and else. A small amount of monoamine or monocarboxylic acid may be added upon polycondensation as a molecular weight regulator. Furthermore, the polycondensation reaction can be suppressed to achieve a desired polymerization degree by adjusting the ratio (molar ratio) of the diamine component and the carboxylic acid component constituting the polyamide (B1) to shift from 1.

From the standpoint of heat resistance and melt moldability, the melting point Tm of the polyamide (B1) is preferably 170-290°C, more preferably 175-280°C, and still more preferably 180-270°C.

### [Modified polyolefin (B2)]

As the modified polyolefin (B2), a polyolefin that is acid-modified with carboxylic acid and/or a derivative thereof, or a polyolefin that is acid-modified with carboxylic acid and/or a derivative thereof and that is further graft-coupled with a polyamide via a functional group incorporated in the molecule upon the acid modification (also referred to as a "polyolefin that is graft-modified with a polyamide") can preferably be used. By acid modification of a polyolefin, a functional group that has affinity with the polyamide components such as the polyamide (B1) and the polyamide (B3) can be incorporated into the molecule. Moreover, additional graft modification of the polyamide via a functional group that has affinity with the polyamide component further enhances affinity with the polyamide components such as the polyamide (B1) and the polyamide (B3).

Preferable examples of the functional group having affiinity with the polyamide component include a carboxylic acid group, a carboxylic acid anhydride group, a carboxylic acid ester group, a metal carboxylate group, a carboxylic acid imide group, a carboxylic acid amide group and an epoxy group.

As the polyolefin, polyethylene, polypropylene or the like can be used, which may be a homopolymer or a copolymer. Among them, polyethylene is preferable from the standpoints of flexibility, weather resistance and else.

As the polyethylene, a low-density polyethylene (LDPE), a linear low-density polyethylene (LLDPE), a very low-density polyethylene (VLDPE), a medium-density polyethylene (MDPE), a high-density polyethylene (HDPE) or the like can be used.

As the copolymer, a copolymer of ethylene or propylene and a monomer that can copolymerize with said ethylene or propylene can be used. Examples of the monomer that can copolymerize with ethylene or propylene include α-olefin, styrene, dienes, cyclic compounds and oxygen-atom-containing compounds.

Examples of α-olefin include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 4-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene and a combination thereof.

Examples of styrene include styrene, 4-methylstyrene, 4-dimethylaminostyrene and a combination thereof.

Examples of dienes include 1,3-butadiene, 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, dicyclooctadiene and a combination thereof.

Examples of the cyclic compound include methylene norbornene, 5-vinyl norbornene, 5-ethylidene-2-norbomene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene and 2-propenyl-2,2-norbornadiene, cyclopentene and a combination thereof.

Examples of the oxygen-atom-containing compound include hexenol, hexenoic acid and methyl octenoate.

Such copolymerizable monomers can be used alone or two or more of them can be used in combination. Moreover, such copolymer may be a copolymer of ethylene and propylene, a copolymer of ethylene, propylene and other monomer.

Among them, the copolymer is preferably an α-olefin copolymer such as a copolymer of ethylene or propylene and α-olefin, or a copolymer of ethylene, propylene and an α-olefin. The α-olefin copolymer may further be copolymerized with other copolymerizable monomer. Examples of a particularly preferable copolymer include an ethylene-butene copolymer and an ethylene-propylene copolymer.

The copolymerization may be any of alternating copolymerization, random copolymerization or block copolymerization.

Preferable examples of the compound that can acid-modify a polyolefin include acrylic acid, methacrylic acid, maleic acid, fumaric acid, itaconic acid, crotonic acid, methylmaleic acid, methylfumaric acid, mesaconic acid, citraconic acid, glutaconic acid, cis-4-cyclohexene-1,2-dicarboxylic acid, endo-bicyclo[2.2.1]-5-heptene-2,3-dicarboxylic acid and metal salts of these carboxylic acids, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endo-bicyclo-[2.2.1]-5-heptene-2,3-dicarboxylic anhydride, maleimide, N-ethylmaleimide, N-butylmaleimide, N-phenylmaleimide, acrylamide, methacrylamide, glycidyl acrylate, glycidyl methacrylate, glycidyl ethacrylate, glycidyl itaconate, and glycidyl citraconate. Among them, maleic anhydride is preferable from the standpoint of melting and mixing properties with other resin.

The polyolefin is usually modified by copolymerization or graft modification. The acid modification ratio of the modified polyolefin (B2) (mass ratio of the acid used for modification to polyolefin) is preferably 0.01-5 mass%, more preferably 0.05-4 mass%, and still more preferably 0.1-3 mass%. As long as the acid modification ratio is within the above-mentioned range, the effect of enhancing affinity with the polyamide component can be exerted without impairing heat stability. The acid modification ratio can be determined by dissolving a resin sample in heated xylene, and titrating the resultant with sodium methylate using phenolphthalein as an indicator.

Herein, the term a "polyolefin that is graft-modified with a polyamide" refers to a polyolefin that is acid-modified with carboxylic acid and/or a derivative thereof and that is further graft-coupled with a polyamide via a functional group incorporated in the molecule upon said acid modification.

The functional group that is incorporated upon acid modification of the polyolefin can be any functional group that can react with a polyamide that has an amine terminal group or a carboxylic acid terminal group, which is preferably, for example, a carboxylic acid anhydride group, an epoxy group or the like.

An example of the polyamide that is graft-coupled with the polyolefin includes a monofunctional polyamide that has an amine terminal group or a carboxylic acid terminal group. The polyamide that is graft-coupled with the polyolefin is not particularly limited and it may be an aliphatic polyamide such as the polyamide (a1) and the polyamide (a2), or an aromatic or semi-aromatic polyamide such as the polyamide (B1).

According to the present invention, the polyamide that is graft-coupled with the polyolefin is preferably an aliphatic polyamide, and particularly preferably polyamide 6, polyamide 11, polyamide 12, and polyamide 6,12 from the standpoint of compatibility with the polyamide (B1) as well as workability. The present invention is advantageous in that a polyolefin graft-modified with an aliphatic polyamide is used to enhance compatibility with the polyamide (B1) as well as workability.

A monofunctional polyamide that has an amine terminal group can be prepared, for example, by using a chain terminating agent represented by Formula: NHR¹ (R²) [wherein, R¹ represents a hydrogen atom, or a C1-C20 linear or branched alkyl group, and R² represents a C1-C20 linear or branched alkyl or alkenyl group, a saturated or unsaturated alicyclic group, an aromatic group or a combination thereof]. Preferable examples of the above-mentioned chain terminating agent include laurylamine or oleylamine.

A monofunctional polyamide that has a carboxylic acid terminal group can be prepared by using a chain terminating agent represented by Formula: R³-COOH, R³-CO-O-CO-R⁴ [wherein, R³ and R⁴ represent a C1-C20 linear or branched alkyl group] or a dicarboxylic acid chain terminating agent.

The molecular weight of the monofunctional polyamide is in a range of preferably 1000-5000 g/mol, and more preferably 2000-3000 g/mol.

The monofunctional polyamide is allowed to react with a polyolefin that is acid-modified with carboxylic acid and/or a derivative thereof and that can react with an polyamide having an amine terminal group or a carboxylic acid terminal group, so as to graft couple the polyamide to the polyolefin.

Preferably, this reaction takes place in a molten state. In general, the monofunctional polyamide and the polyolefin are allowed to react by being melt kneaded with an extruder at a temperature of 230-300°C.

For a method for producing a polyolefin graft-modified with a polyamide, see, for example, Japanese Unexamined Patent Application Publication No. 2010-518217, the specifications of US Patent Nos. 3976720, 3963799 and 5342886, and the specification of French Patent No. 2291225.

A polyolefin graft-modified with a polyamide is generally commercially available from ARKEMA under the trade names of "APOLHYA" series (for example,, APOLHYA LP-21H, APOLHYA LC3, etc.). According to the present invention, such a commercial product may also be used.

From the standpoints of elastic modulus, flexibility and impact resistance, examples of the modified polyolefin (B2) that can particularly favorably be used with the present invention include a maleic anhydride-modified polyethylene, a maleic anhydride-modified α-olefin copolymer such as a maleic anhydride-modified ethylene-butene copolymer, and a polyolefin graft-modified with an aliphatic polyamide. Among them, a maleic anhydride-modified ethylene-butene copolymer is particularly preferably be used.

The modified polyolefin (B2) may be used alone or two or more of them may be used in combination.

### [Polyamide (B3)]

The polyamide (B3) is selected from the group consisting of a polyamide (b1) containing at least either one of a C6-C12 lactam-derived constituent unit and a C6-C12 aminocarboxylic acid-derived constituent unit, and a polyamide (b2) containing a C6-C12 aliphatic diamine-derived constituent unit and a C10-C12 aliphatic dicarboxylic acid-derived constituent unit. The polyamide (b1) and the polyamide (b2) will be described below.

### [Polyamide (b1)]

The polyamide (b1) includes at least either one of a C6-C12 lactam-derived constituent unit or a C6-C12 aminocarboxylic acid-derived constituent unit.

The C6-C12 lactam-derived constituent unit and the C6-C12 aminocarboxylic acid-derived constituent unit usually contains an ω-aminocarboxylic acid unit represented by General formula (II) below.

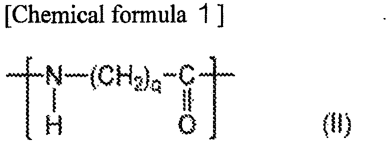

In General formula (II), q represents an integer of 5-11.

Specific examples of the compound constituting the C6-C12 lactam-derived constituent unit include caprolactam, heptalactam, octalactam, nonalactam, decanelactam, undecanelactam and dodecanelactam. Meanwhile, examples of the compound constituting the C6-C12 aminocarboxylic acid-derived constituent unit include 6-aminocaproic acid, 7-aminoheptanoic acid, 8-aminooctanoic acid, 9-aminononanoic acid, 10-aminodecanoic acid, 11-aminoundecanoic acid and 12-aminododecanoic acid.

Examples of other constituent unit in the polyamide (b1) include those derived from lactams other than the C6-C12 lactams and aminocarboxylic acids other than the C6-C12 aminocarboxylic acids, and a nylon salt-derived constituent unit made from diamine and dicarboxylic acid.

Examples of the lactams other than the C6-C12 lactams include three- or higher-membered lactams. Specifically, α-pyrrolidone, α-piperidone or the like can be exemplified. Meanwhile, examples of aminocarboxylic acids other than the C6-C12 aminocarboxylic acids include 4-aminobutanoic acid and 5-aminopentanoic acid.

Examples of the diamines constituting the nylon salt include aliphatic diamines such as ethylenediamine, propylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, 1,13-tridecanediamine, 1,14-tetradecanediamine, 1,15-pentadecanediamine, 1,16-hexadecanediamine, 1,17-heptadecanediamine, 1,18-octadecanediamine, 1,19-nonadecanediamine, 1,20-eicosanediamine, 2-methyl-1,5-pentanediamine, 3-methyl-1,5-pentanediamine, 2-methyl-1,8-octanediamine and 2,2,4- or 2,4,4-trimethylhexanediamine; alicyclic diamines such as 1,3- or 1,4-cyclohexanediamine, 1,3- or 1,4-bis(aminomethyl)cyclohexane, bis(4-aminocyclohexyl)methane, 2,2-bis(4-aminocyclohexyl)propane, bis(3-methyl-4-aminocyclohexyl)methane, 2,2-bis(3-methyl-4-aminocyclohexyl)propane, 5-amino-2,2,4-trimethylcyclopentanemethaneamine, 5-amino-1,3,3-trimethylcyclohexanemethaneamine, bis(aminopropyl)piperazine, bis(aminoethyl)piperazine, norbornane dimethylamine and tricyclodecane dimethylamine; and diamines having an aromatic ring such as para-xylylenediamine and meta-xylylenediamine.

Examples of the dicarboxylic acids constituting the nylon salt include aliphatic dicarboxylic acids such as adipic acid, pimelic acid, suberic acid, azelaic acid, sebacic acid, 1,9-nonanedicarboxylic acid, 1,10-decanedicarboxylic acid, 1,11-undecanedicarboxylic acid and 1,12-dodecanedicarboxylic acid; alicyclic dicarboxylic acids such as 1,3- or 1,4-cyclohexanedicarboxylic acid, dicyclohexanemethane-4,4'-dicarboxylic acid and norbornane dicarboxylic acid; and aromatic dicarboxylic acids such as isophthalic acid, terephthalic acid and 1,4-, 2,6- or 2,7-naphthalene dicarboxylic acid.

As the polyamide (b1), polyamide 6 that includes at least either one of a caprolactam-derived constituent unit and a 6-aminocaproic acid-derived constituent unit as a main component, polyamide 11 that includes at least either one of an undecanelactam-derived constituent unit and a 11-aminoundecanoic acid-derived constituent unit as a main component, polyamide 12 that includes at least either one of a dodecanelactam-derived constituent unit and a 12-aminododecanoic acid-derived constituent unit as a main component, polyamide 6,12 that is obtained by copolymerizing a caprolactam-derived constituent unit and a 6-aminocaproic acid-derived constituent unit with a dodecanelactam-derived constituent unit and a 12-aminododecanoic acid-derived constituent unit, or a mixture of polyamide 6, polyamide 11 and polyamide 12 is preferable.

The polyamide (b1) can be produced in the same manner as the polyamide (a1).

The melting point Tm of the polyamide (b1) is preferably 160-240°C, more preferably 165-230°C and still more preferably 170-220°C from the standpoints of heat resistance and melt moldability.

### [Polyamide (b2)]

The polyamide (b2) includes a C6-C12 aliphatic diamine-derived constituent unit and a C10-C12 aliphatic dicarboxylic acid-derived constituent unit. The polyamide (b2) may be the same as the polyamide (a2) described under "Polyamide layer (A)".

The polyamide (B3) is one or more selected from the group consisting of such polyamides (b1) and (b2). The polyamide (B3) may be either one of the polyamide (b1) or (b2), or a combination of the polyamides (b1) and (b2).

Examples of the polyamide (B3) that can favorably be used with the present invention include one or more selected from the group consisting of polyamide 6, polyamide 6,12, polyamide 10,10, polyamide 11 and polyamide 12. Among them, polyamide 6,12, polyamide 10,10, polyamide 12 or a mixture thereof is more preferable from the standpoint of tensile elongation at break. Among all, polyamide 6,12 can particularly preferably be used since it can greatly enhance the tensile elongation at break with a small amount.

### [Carbon nanotube (B4)]

If necessary, the polyamide composition (B) may contain a carbon nanotube. When the multi-layer structure of the present invention is used, for example, as a pipe, a hose or a tube for liquid fuel transportation, a conductive filler is preferably blended for imparting an antistatic property so as to prevent ignition of the fuel due to a spark caused by accumulation of charges resulting from the friction between the liquid fuel flowing inside the multi-layer structure and the innermost layer. According to the present invention, a carbon nanotube is preferably used among the conductive fillers. By blending a carbon nanotube into the polyamide composition (B), an antistatic property can be imparted to the polyamide layer (B) without impairing the low-temperature impact resistance of the multi-layer structure. On the other hand, when carbon black or graphite is used as a conductive filler, the low-temperature impact resistance of the multi-layer structure may be deteriorated, which limits the usage thereof.

A carbon nanotube is a tube or hollow fiber with a diameter of about 5-20 nm and a length that is about 100-1000 times longer than the diameter. In general, two types of carbon nanotubes, i.e., single-walled and multi-walled nanotubes, are known. In a case of a completely single-walled carbon nanotube, a graphite sheet is rolled up into a cylinder which is made only of closed carbon atoms. A multi-walled carbon nanotube is made of concentrically stacked single-walled nanotubes. The diameter of a single-walled carbon nanotube is 2-3 nm. The diameter of a multi-walled carbon nanotube is about 10-30 nm. In either cases, the length is 2-3 µm.

The polyamide composition (B) that constitutes the polyamide layer (B) contains the polyamide (B1), the modified polyolefin (B2), the polyamide (B3) and, if necessary, the carbon nanotube (B4) described above.

The content of the modified polyolefin (B2) in the polyamide composition (B) is 5-15 parts by mass, preferably 6 parts by mass or more, more preferably 7 parts by mass or more and still more preferably 8 parts by mass or more, and preferably 14 parts by mass or less, more preferably 13 parts by mass or less and still more preferably 12 parts by mass or less, per 100 parts by mass of the polyamide (B1). If the content of the modified polyolefin (B2) is too large, moldability will be poor whereas if the content is too small, flexibility of the multi-layer structure will be deteriorated.

The content of the polyamide (B3) is 5-20 parts by mass, preferably 6 parts by mass or more, more preferably 7 parts by mass or more and still more preferably 8 parts by mass or more, and preferably 15 parts by mass or less, more preferably 10 parts by mass or less and still more preferably 8 parts by mass or less, per 100 parts by mass of the polyamide (B1). If the content of the polyamide (B3) is too large, barrier performance of the multi-layer structure will be deteriorated whereas if the content is too small, flexibility will be deteriorated.

If the polyamide composition (B) contains a carbon nanotube (B4), the content of the carbon nanotube (B4) is preferably 1.5 parts by mass or more, more preferably 1.8 parts by mass or more and still more preferably 2.0 parts by mass or more, and preferably 10 parts by mass or less, more preferably 8 parts by mass or less and still more preferably 6 parts by mass or less, per 100 parts by mass of the polyamide (B1).

As long as the weight ratios of the respective components of the polyamide composition (B) is within the above-described ranges, the multi-layer structure of the present invention can have excellent flexibility, chemical resistance and gas barrier performance. Moreover, as long as the weight ratio of the carbon nanotube is within the above-described range, an antistatic property can be imparted to the polyamide layer (B) without impairing the low-temperature impact resistance of the multi-layer structure of the present invention.

The polyamide composition (B) may contain various additives as long as the purpose of the present invention is not impaired. Examples of such various additives include plasticizers such as benzenesulfonic acid alkylamides, toluenesulfonic acid alkylamides and hydroxybenzoic acid alkylesters, conductive fillers as typified by carbon black, graphite and a metal-containing filler, an antioxidant, a heat stabilizer, an ultraviolet absorber, a light stabilizer, a lubricant, an inorganic filler, an antistatic agent, a flame retardant, a crystallization accelerator, and an impact resistance improving agent. The content of the additives in the polyamide composition (B) is preferably 20 mass% or less, more preferably 15 mass% or less, and still more preferably 12 mass% or less.

The polyamide composition (B) can be prepared by mixing the polyamide (B1), the modified polyolefin (B2), the polyamide (B3), if necessary, the carbon nanotube (B4), and further various additives, and melt kneading the resulting mixture with an extruder.

The multi-layer structure of the present invention may have one or more of the respective polyamide layers (A) and (B). Examples of the layering of the multi-layer structure of the present invention include (A)/(B), (B)/(A), (A)/(B)/(A), (B)/(A)/(B), (A)/(B)/(A)/(B), (B)/(A)/(B)/(A), (A)/(B)/(A)/(B)/(A), and (B)/(A)/(B)/(A)/(B). Among them, (B)/(A) is preferable. When the multi-layer structure has more than one polyamide layer (A) and (B), respectively, the composition of the more than one polyamide layer (A) and (B) may be the same or different. When there are more than one polyamide layer (B), the carbon nanotube (B4) may be blended into all or only some of the polyamide layers (B). For example, when there are more than one polyamide layer (B), the carbon nanotube (B4) may be blended into only the inner polyamide layer (B).

Herein, if the multi-layer structure has a hollow structure such as a cylindrical molded body, for example, the notation X/Y/Z means, unless otherwise noted, that the layers are laminated in the order of X, Y and Z from inside toward outside. More specifically, for example, notation (B)/(A) means that the layer (B) is inside. If the multi-layer structure has more than one layer (A), the layers (A) may be the same or different, and the same applies to layers (B).

The multi-layer structure of the present invention can be produced by laminating the polyamide layer (A) made from the polyamide composition (A) and the polyamide layer (B) made from the polyamide composition (B) by a known method such as coextrusion using an extruder with a multi-layer die. The thickness ratio of the polyamide layer (A) and the polyamide layer (B) is not particularly limited and can suitably be determined according to application. In general, (thickness of polyamide layer (A))/(thickness of polyamide layer (B)) is preferably 99:1-10:90, more preferably 99:1-15:85, still more preferably 99:1-20:80, yet still more preferably 95:5-20:80, and particularly preferably 90:10-20:80. Here, if there are more than one layer (A), the thickness of the polyamide layer (A) refers to the total thickness of these layers (A). Similarly, if there are more than one layer (B), the thickness of the polyamide layer (B) refers to the total thickness of these layers (B).

The multi-layer structure of the present invention may have layers other than the polyamide layer (A) and the polyamide layer (B). For example, it may have a resin layer, an adhesive layer or the like made of a thermoplastic resin such as a maleic anhydride-modified polyolefin, a fluorine resin, polyimide, polyamide, polyester, polystyrene and vinyl chloride.

Examples of the multi-layer structure of the present invention include a hollow structure, a film, and other various structures.

In a case where the multi-layer structure of the present invention is used as a hollow structure or a film, the thickness of the multi-layer structure is not particularly limited and can suitably be determined according to usage. For example, it is in a range of preferably 0.01-10 mm, and more preferably 0.1-5 mm.

Since the multi-layer structure of the present invention has excellent flexibility, chemical resistance and gas barrier performance, it can favorably be used as a piping material for fuel transportation, a fuel storage vessel or the like. For example, it can particularly favorably be used as a piping material for fuel transportation, a fuel storage vessel or the like for an alkane such as hexane and octane; an aromatic compound such as toluene and benzene; an alcohol such as methanol and ethanol; alcohol gasoline obtained by mixing isooctane, toluene and alcohol.

While the arrangement of the polyamide layer (A) and the polyamide layer (B) is not particularly limited, when used as a piping material for fuel transportation, a fuel storage vessel or the like, the polyamide layer (B) is preferably arranged inside.

Since the multi-layer structure of the present invention has good moldability and excellent flexibility, chemical resistance and gas barrier performance, it can be used in a form of a hollow structure such as a pipe, a hose or a tube. In particular, the multi-layer structure of the present invention can favorably be used as a pipe, a hose, a tube or a connector for connecting them for fuel transportation.

A hollow structure such as a pipe, a hose, a tube or a connector can be produced by melt extruding with an extruder, cylindrically extruding via a cyclic die, shaping through a sizing former for controlling the dimensions, cooling in a water tank or the like, and winding up with a wind-up machine.

Production can be realized by a method in which the polyamide layer (A) and the polyamide layer (B) are melt extruded with respective extruders, and supplied to a die to form respective annular flows to be coextruded inside or outside the die for lamination (coextrusion method), or by a method in which a single-layer hollow molded body is first produced and then a resin is laminated outside and integrated with the hollow molded body, if necessary, using an adhesive (coating method). If the polyamide layer (B) contains a carbon nanotube (B4) in addition to the polyamide (B1), the modified polyolefin (B2) and the polyamide (B3), the carbon nanotube (B4) is preferably mixed with the polyamide (B3) in advance to make masterbatch, which is then mixed with the polyamide (B1) and the modified polyolefin (B2) to prepare the polyamide composition (B).

If the multi-layer structure has a complicated shape or if the multi-layer structure is made by bending after the molding, the formed multi-layer structure can be heated at a temperature lower than the lowest melting point of the resin constituting the multi-layer structure to remove the residual distortion, thereby obtaining the multi-layer structure of interest.

The multi-layer structure of the present invention may have, at least partially, a waveform region. Herein, a waveform region refers to a region that is formed to have a waveform shape, a bellows shape, an accordion shape, a corrugated shape or the like. If the multi-layer structure of the present invention is, for example, a hollow structure, the hollow structure with a waveform region can easily be formed by shaping a straight tube type hollow structure which is then molded to form a predetermined waveform shape. Alternatively, the hollow structure may, for example, be provided with required parts such as a connector or bended to have an L- or U-shape.

### EXAMPLES

Hereinafter, the present invention will be described more specifically by way of examples, although the present invention should not be limited to these examples. Herein, evaluations of various physical properties were carried out for the examples and else according to the following methods.

### (1) Tensile elongation at break

Evaluations were conducted according to JIS K-7161: 1994 and K-7127: 1999. The film with a thickness of 200 µm produced in each of Examples, Reference examples and Comparative examples was cut out into 10 mm x 100 mm to be used as a test piece. A strograph from Toyo Seiki Seisaku-sho was used to perform a tensile test under the following conditions to determine the tensile elongation at break: measurement temperature of 23°C, humidity of 50%RH, distance between the chucks of 50 mm and pulling speed of 50 mm/min. The tensile elongation at break of 250% or higher was regarded acceptable.

### (2) Fuel barrier performance (CE10 permeability)

15 ml of CE10 (isooctane/toluene/ethanol = 45/45/10 vol%) was placed into an aluminum cup that has a permeable cross-sectional area of 11.34 cm², whose opening was sealed with the 200 µm-thick film prepared in each of Examples, Reference examples and Comparative examples with the layer (B) inside (with the layer (A) inside for Comparative example 1 that had no layer (B)), and left to stand under the atmosphere of 40°C. The change in the cup weight was measured 300 hours after sealing the opening. The change in the cup weight with less or equal than 0.2 g was evaluated as A, and more than 0.2 g was evaluated as B, where A was regarded acceptable.

### (3) Adhesiveness

### (3-1) Adhesiveness (A)

Adhesiveness was measured according to JIS K5600-5-6 (ISO2409). Cuts were made in the polyamide layer (A) of the 200 µm-thick film prepared in each of Examples and Comparative examples with a cutter knife to make a grid pattern with 100 squares at intervals of 2 mm, to which Cellotape (registered trademark, from Nichiban) was attached and unfailingly pulled off within 5 minutes at 0.5-1.0 second at an angle close to 60 degrees to confirm the peeled state of the polyamide layer (A).

### (3-2) Adhesiveness (B)

Adhesiveness was measured according to JIS K5600-5-6 (ISO2409). Cuts were made in the polyamide layer (B) of the 200 µm-thick film prepared in each of Examples, Reference examples and Comparative examples with a cutter knife to make a grid pattern with 100 squares at intervals of 2 mm, to which Cellotape (registered trademark, from Nichiban) was attached and unfailingly pulled off within 5 minutes at 0.5-1.0 second at an angle close to 60 degrees to confirm the peeled state of the polyamide layer (B).

### (4) Adhesiveness after immersion in fuel

Adhesiveness of the 200 µm-thick films prepared in Examples, Reference examples and Comparative examples that were immersed in CE10 for 500 hours under an atmosphere of 80°C were evaluated in the same manner as (3) above.

### (5) Surface resistance of film

The surface resistance of the 200 µm-thick films prepared in Examples, Reference examples and Comparative examples were measured with Loresta-GX MCP-T700 (from Mitsubishi Chemical Analytech). Surface resistance of 1.0 x 10⁶ Ω/sq or lower was evaluated as A, and surface resistance higher than 10⁶ Ω/sq was evaluated as B, where A was regarded acceptable.

### (6) Low-temperature impact resistance

The 1000 µm-thick tubes prepared in Examples, Reference examples and Comparative examples were left to stand for 4 hours under the conditions of -40°C or -20°C. Those that did not have cracks after allowing a weight of 0.9 kg to fall thereon from the height of 300 mm were regarded acceptable. Evaluation was done by the number of occurrence of cracks out of 10 times of evaluations (n = 10).

### <Production of polyamide B1>

### Production example 1

### Production of polyamide (B1-1)

730.8 g of adipic acid, 0.6322 g of sodium hypophosphite monohydrate and 0.4404 g of sodium acetate were fed into a reaction vessel with a volume of about 3L that was provided with an agitator, a nitrogen gas inlet port and a condensation water discharge port. After an adequate nitrogen replacement in the vessel, the resultant was melted at 170°C while supplying nitrogen gas at 20 ml/min. While gradually raising the temperature to 250°C, 681.0 g of meta-xylylenediamine (MXDA) (from Mitsubishi Gas Chemical Company) was dropped for about 2 hours of polymerization, thereby obtaining polymethaxylylene adipamide (polyamide (B1-1)). The resulting polyamide (B1-1) had a relative viscosity (ηᵣ) and a melting point (Tm) of 2.1 and 237.4°C, respectively.

### Production example 2

### Production of polyamide (B1-2)

730.8 g of adipic acid, 0.6322 g of sodium hypophosphite monohydrate and 0.4404 g of sodium acetate were fed into a reaction vessel with a volume of about 3L that was provided with an agitator, a nitrogen gas inlet port and a condensation water discharge port. After an adequate nitrogen replacement in the vessel, the resultant was melted at 170°C while supplying nitrogen gas at 20 ml/min. While gradually increasing the temperature to 280°C, a mixture solution of 476.7 g of meta-xylylenediamine (MXDA) (from Mitsubishi Gas Chemical Company) and 204.3 g of para-xylylenediamine (PXDA) (from Mitsubishi Gas Chemical Company) (molar ratio (MXDA/PXDA = 70/30)) was dropped for about 2 hours of polymerization, thereby obtaining a polyamide (B1-2). The resulting polyamide (B1-2) had a relative viscosity (ηᵣ) and a melting point (Tm) of 2.1 and 261.3°C, respectively.

### Production example 3

### Production of polyamide (B1-3)

800 g of sebacic acid, 0.613 g of sodium hypophosphite monohydrate and 0.427 g of sodium acetate were fed into a reaction vessel with a volume of about 3L that was provided with an agitator, a nitrogen gas inlet port and a condensation water discharge port. After an adequate nitrogen replacement in the vessel, the resultant was melted at 170°C while supplying nitrogen gas at 20 ml/min. While gradually increasing the temperature to 230°C, 536 g of meta-xylylenediamine (MXDA) (from Mitsubishi Gas Chemical Company) was dropped for about 2 hours of polymerization, thereby obtaining a polyamide (B1-3). The resulting polyamide (B1-3) had a relative viscosity (ηᵣ) and a melting point (Tm) of 2.3 and 191.3°C, respectively.

### Production example 4

### Production of polyamide (B1-4)

800 g of sebacic acid, 0.613 g of sodium hypophosphite monohydrate and 0.427 g of sodium acetate were fed into a reaction vessel with a volume of about 3L that was provided with an agitator, a nitrogen gas inlet port and a condensation water discharge port. After an adequate nitrogen replacement in the vessel, the resultant was melted at 170°C while supplying nitrogen gas at 20 ml/min. While gradually increasing the temperature to 250°C, a mixture solution of 375 g of meta-xylylenediamine (MXDA) (from Mitsubishi Gas Chemical Company) and 161 g of para-xylylenediamine (PXDA) (from Mitsubishi Gas Chemical Company) (molar ratio (MXDA/PXDA = 70/30)) was dropped for about 2 hours of polymerization, thereby obtaining a polyamide (B1-4). The resulting polyamide (B1-4) had a relative viscosity (ηᵣ) and a melting point (Tm) of 2.2 and 212.0°C, respectively.

### Example 1

### <Production of polyamide composition (A)>

A maleic anhydride-modified ethylene/propylene copolymer (from JSR, JSRT7712SP) as a modified polyolefin was mixed with polyamide 12 (from Ube Industries, UBESTA3030U, relative viscosity 2.27) in advance. The resultant was supplied into a twin-screw extruder that had a screw diameter of ϕ37 mm and that was equipped with a kneading disc, and melt kneaded at a cylinder temperature of 180-260°C. After extruding the molten resin into a strand, the resultant was introduced into a water tank, cooled, cut and vacuum dried, thereby obtaining pellets of the polyamide composition (A) made from 80 parts by mass of polyamide 12 and 20 parts by mass of the modified polyolefin.

### <Production of polyamide composition (B)>

100 parts by mass of the polyamide resin (B1-1) obtained in Production example 1 was mixed with 10 parts by mass of a 1 mass% maleic anhydride-modified ethylene/butene copolymer (from Mitsui Chemicals, Tafmer MH5020) as the modified polyolefin (B2) and 10 parts by mass of polyamide 6,12 (from Ube Industries, "UBE nylon" 7034B) as the polyamide (B3) in advance. The resultant was supplied into a twin-screw extruder that had a screw diameter of ϕ37 mm and that was equipped with a kneading disc, and melt kneaded at a cylinder temperature of 240-260°C. After extruding the molten resin into a strand, the resultant was introduced into a water tank, cooled, cut and vacuum dried, thereby obtaining pellets of the polyamide composition (B).

### <Production of multi-layer structure>

The polyamide composition (A) for forming a polyamide layer (A) and the polyamide composition (B) for forming a polyamide layer (B) were used to form a multi-layer structure (film) made of layer (B)/layer (A) with a multi-layer film molding machine equipped with two extruders at a layer (A) extruding temperature of 240°C, a layer (B) extruding temperature of 280°C and a flow channel temperature of 280°C after the lamination. The thickness of the layer (A) was 40 µm and the thickness of the layer (B) was 160 µm.

### Example 2

### <Production of polyamide composition (A)>

Pellets of the polyamide composition (A) were obtained in the same manner as Example 1.

### <Production of polyamide composition (B)>

85 parts by mass of the polyamide (B1-1) obtained in Production example 1 and 15 parts by mass of the polyamide (B1-3) obtained in Production example 3, i.e., a total of 100 parts by mass, were used as the polyamide (B1), with which 10 parts by mass of a 1 wt% maleic anhydride-modified ethylene/butene copolymer (from Mitsui Chemicals, Tafmer MH5020) as the modified polyolefin (B2) and 10 parts by mass of polyamide 6,12 (from Ube Industries, "UBE nylon" 7034B) as the polyamide (B3) were mixed in advance. The resultant was supplied into a twin-screw extruder that had a screw diameter of ϕ37 mm and that was equipped with a kneading disc, and melt kneaded at a cylinder temperature of 240-260°C. After extruding the molten resin into a strand, the resultant was introduced into a water tank, cooled, cut and vacuum dried, thereby obtaining pellets of the polyamide composition (B).

### <Production of multi-layer structure>

The resulting polyamide compositions (A) and (B) were used to form a multi-layer structure (film) made of layer (B)/layer (A) in the same manner as Example 1. The thickness of the layer (A) was 40 µm and the thickness of the layer (B) was 160 µm.

### Examples 3-9

### <Production of polyamide composition (A)>

Pellets of the polyamide composition (A) were obtained in the same manner as Example 1.

### <Production of polyamide composition (B)>

Pellets of the respective polyamide compositions (B) were obtained in the same manner as Example 2 except that polyamides (B1) obtained by blending with the respective polyamides obtained in Production examples 1-4 at the composition ratios indicated in Table 1 were used and mixed with a 1 wt% maleic anhydride-modified ethylene/butene copolymer (from Mitsui Chemicals, Tafmer MH5020) as the modified polyolefin (B2) and polyamide 6,12 (from Ube Industries, "UBE nylon" 7034B) as the polyamide (B3) at the composition ratios indicated in Table 1.

### <Production of multi-layer structure>

The resulting polyamide compositions (A) and (B) were used to form a multi-layer structure (film) made of layer (B)/layer (A) in the same manner as Example 1. The thickness of the layer (A) was 40 µm and the thickness of the layer (B) was 160 µm.

### Example 10

### <Production of polyamide composition (A)>

Polyamide 10,10 (from Arkema, "Rilsan" TESN P213TL) was used alone.

### <Production of polyamide composition (B)>

Pellets of the polyamide composition (B) were obtained in the same manner as Example 2 except that a polyamide (B1) obtained by blending the polyamides (B1-1) and (B1-3) obtained in Production examples 1 and 3 at the composition ratio indicated in Table 1 was used and mixed with a 1 wt% maleic anhydride-modified ethylene/butene copolymer (from Mitsui Chemicals, Tafmer MH5020) as the modified polyolefin (B2) and polyamide 6,12 (from Ube Industries, "UBE nylon" 7034B) as the polyamide (B3) at the composition ratio indicated in Table 1.

### <Production of multi-layer structure>

The resulting polyamide compositions (A) and (B) were used to form a multi-layer structure (film) made of layer (B)/layer (A) in the same manner as Example 1. The thickness of the layer (A) was 40 µm and the thickness of the layer (B) was 160 µm.

### Example 11

### <Production of polyamide composition (A)>

Polyamide 11 (from Arkema, "Rilsan" BESN P20TL) was used alone.

### <Production of polyamide composition (B)>

Pellets of the polyamide composition (B) were obtained in the same manner as Example 2 except that a polyamide (B1) obtained by blending the polyamides (B1-1) and (B1-3) obtained in Production examples 1 and 3 at the composition ratio indicated in Table 2 was used and mixed with a 1 wt% maleic anhydride-modified ethylene/butene copolymer (from Mitsui Chemicals, Tafmer MH5020) as the modified polyolefin (B2) and polyamide 6,12 (from Ube Industries, "UBE nylon" 7034B) as the polyamide (B3) at the composition ratio indicated in Table 2.

### <Production of multi-layer structure>

The resulting polyamide compositions (A) and (B) were used to form a multi-layer structure (film) made of layer (B)/layer (A) in the same manner as Example 1. The thickness of the layer (A) was 40 µm and the thickness of the layer (B) was 160 µm.

### Example 12

### <Production of polyamide composition (A)>

Pellets of the polyamide composition (A) were obtained in the same manner as Example 1.

### <Production of polyamide composition (B)>

Pellets of the polyamide composition (B) were obtained in the same manner as Example 2 except that a polyamide (B1) obtained by blending the polyamides (B1-1) and (B1-3) obtained in Production examples 1 and 3 at the composition ratio indicated in Table 2 was used and mixed with a 2 wt% maleic anhydride-modified ethylene/butene copolymer (from Mitsui Chemicals, Tafmer MH5040) as the modified polyolefin (B2) and polyamide 6,12 (from Ube Industries, "UBE nylon" 7034B) as the polyamide (B3) at the composition ratio indicated in Table 2.

### <Production of multi-layer structure>

The resulting polyamide compositions (A) and (B) were used to form a multi-layer structure (film) made of layer (B)/layer (A) in the same manner as Example 1. The thickness of the layer (A) was 40 µm and the thickness of the layer (B) was 160 µm.

### Example 13

### <Production of polyamide composition (A)>

Pellets of the polyamide composition (A) were obtained in the same manner as Example 1.

### <Production of polyamide composition (B)>

Pellets of the polyamide composition (B) were obtained in the same manner as Example 2 except that a polyamide (B1) obtained by blending the polyamides (B1-1) and (B1-3) obtained in Production examples 1 and 3 at the composition ratio indicated in Table 2 was used and mixed with a polyamide 6-grafted polyethylene (from Arkema, "Apolhya" LP-21H) as the modified polyolefin (B2) and polyamide 6,12 (from Ube Industries, "UBE nylon" 7034B) as the polyamide (B3) at the composition ratio indicated in Table 2.

### <Production of multi-layer structure>

The resulting polyamide compositions (A) and (B) were used to form a multi-layer structure (film) made of layer (B)/layer (A) in the same manner as Example 1. The thickness of the layer (A) was 40 µm and the thickness of the layer (B) was 160 µm.

### Example 14

### <Production of polyamide composition (A)>

Polyamide 11 (from Arkema, "Rilsan" BESN P20TL) was used alone.

### <Production of polyamide composition (B)>

Pellets of the polyamide composition (B) were obtained in the same manner as Example 2 except that a polyamide (B1) obtained by blending the polyamides (B1-1) and (B1-3) obtained in Production examples 1 and 3 at the composition ratio indicated in Table 2 was used and mixed with a 1 wt% maleic anhydride-modified ethylene/butene copolymer (from Mitsui Chemicals, Tafmer MH5020) as the modified polyolefin (B2) and polyamide 12 (from Daicel, X7393) as the polyamide (B3) at the composition ratio indicated in Table 2.

### <Production of multi-layer structure>

The resulting polyamide compositions (A) and (B) were used to form a multi-layer structure (film) made of layer (B)/layer (A) in the same manner as Example 1. The thickness of the layer (A) was 40 µm and the thickness of the layer (B) was 160 µm.

### Example 15

### <Production of polyamide composition (A)>

Pellets of the polyamide composition (A) were obtained in the same manner as Example 1.

### <Production of polyamide composition (B)>

Pellets of the polyamide composition (B) were obtained in the same manner as Example 2 except that a polyamide (B1) obtained by blending the polyamides (B1-1) and (B1-3) obtained in Production examples 1 and 3 at the composition ratio indicated in Table 2 was used and mixed with a 1 wt% maleic anhydride-modified ethylene/butene copolymer (from Mitsui Chemicals, Tafmer MH5020) as the modified polyolefin (B2) and polyamide 12 (from Daicel, X7393) as the polyamide (B3) at the composition ratio indicated in Table 2. <Production of multi-layer structure>

The resulting polyamide compositions (A) and (B) were used to form a multi-layer structure (film) made of layer (B)/layer (A) in the same manner as Example 1. The thickness of the layer (A) was 40 µm and the thickness of the layer (B) was 160 µm.

### Example 16

### <Production of polyamide composition (A)>

Pellets of the polyamide composition (A) were obtained in the same manner as Example 1.

### <Production of polyamide composition (B)>

Pellets of the polyamide composition (B) were obtained in the same manner as Example 2 except that a polyamide (B1) obtained by blending the polyamides (B1-1) and (B1-3) obtained in Production examples 1 and 3 at the composition ratio indicated in Table 2 was used and mixed with a 1 wt% maleic anhydride-modified ethylene/butene copolymer (from Mitsui Chemicals, Tafmer MH5020) as the modified polyolefin (B2) and polyamide 10,10 (from Arkema, "Rilsan" TESN P213TL) as the polyamide (B3) at the composition ratio indicated in Table 2.

### <Production of multi-layer structure>

The resulting polyamide compositions (A) and (B) were used to form a multi-layer structure (film) made of layer (B)/layer (A) in the same manner as Example 1. The thickness of the layer (A) was 40 µm and the thickness of the layer (B) was 160 µm.

### Example 17

### <Production of polyamide composition (A)>

Pellets of the polyamide composition (A) were obtained in the same manner as Example 1.

### <Production of polyamide composition (B)>

Pellets of the polyamide composition (B) were obtained in the same manner as Example 2 except that a polyamide (B1) obtained by blending the polyamides (B1-1) and (B1-3) obtained in Production examples 1 and 3 at the composition ratio indicated in Table 2 was used and mixed with a 1 wt% maleic anhydride-modified ethylene/butene copolymer (from Mitsui Chemicals, Tafmer MH5020) as the modified polyolefin (B2) and polyamide 10,10 (from Arkema, "Rilsan" TESN P213TL) as the polyamide (B3) at the composition ratio indicated in Table 2.

### <Production of multi-layer structure>

The resulting polyamide compositions (A) and (B) were used to form a multi-layer structure (film) made of layer (B)/layer (A) in the same manner as Example 1. The thickness of the layer (A) was 40 µm and the thickness of the layer (B) was 160 µm.

### Example 18

### <Production of polyamide composition (A)>

Polyamide 11 (from Arkema, "Rilsan" BESN P20TL) was used alone.

### <Production of polyamide composition (B)>

Pellets of the polyamide composition (B) were obtained in the same manner as Example 2 except that a polyamide (B1) obtained by blending the polyamides (B1-1) and (B1-3) obtained in Production examples 1 and 3 at the composition ratio indicated in Table 2 was used and mixed with a 1 wt% maleic anhydride-modified ethylene/butene copolymer (from Mitsui Chemicals, Tafmer MH5020) as the modified polyolefin (B2) and polyamide 6 (from Ube Industries, 1024B) as the polyamide (B3) at the composition ratio indicated in Table 2.

### <Production of multi-layer structure>

The resulting polyamide compositions (A) and (B) were used to form a multi-layer structure (film) made of layer (B)/layer (A) in the same manner as Example 1. The thickness of the layer (A) was 40 µm and the thickness of the layer (B) was 160 µm.

### Example 19

### <Production of polyamide composition (A)>

Pellets of the polyamide composition (A) were obtained in the same manner as Example 1.

### <Production of polyamide composition (B)>

Pellets of the polyamide composition (B) were obtained in the same manner as Example 2 except that a polyamide (B1) obtained by blending the polyamides (B1-1) and (B1-3) obtained in Production examples 1 and 3 at the composition ratio indicated in Table 2 was used and mixed with a 1 wt% maleic anhydride-modified ethylene/butene copolymer (from Mitsui Chemicals, Tafmer MH5020) as the modified polyolefin (B2) and polyamide 6 (from Ube Industries, 1024B) as the polyamide (B3) at the composition ratio indicated in Table 2.

### <Production of multi-layer structure>

The resulting polyamide compositions (A) and (B) were used to form a multi-layer structure (film) made of layer (B)/layer (A) in the same manner as Example 1. The thickness of the layer (A) was 40 µm and the thickness of the layer (B) was 160 µm.

### Example 20

### <Production of polyamide composition (A)>

Pellets of the polyamide composition (A) were obtained in the same manner as Example 1.

### <Production of polyamide composition (B)>

Pellets of the polyamide composition (B) were obtained in the same manner as Example 2 except that a polyamide (B1) obtained by blending the polyamides (B1-1) and (B1-3) obtained in Production examples 1 and 3 at the composition ratio indicated in Table 2 was used and mixed with a 1 wt% maleic anhydride-modified ethylene/butene copolymer (from Mitsui Chemicals, Tafiner MH5020) as the modified polyolefin (B2) and polyamide 6 (from Ube Industries, 1024B) as the polyamide (B3) at the composition ratio indicated in Table 2.

### <Production of multi-layer structure>

The resulting polyamide compositions (A) and (B) were used to form a multi-layer structure (film) made of layer (B)/layer (A) in the same manner as Example 1. The thickness of the layer (A) was 40 µm and the thickness of the layer (B) was 160 µm.

### Comparative example 1

Pellets of the polyamide composition (A) obtained in the same manner as Example 1 were used to form a single-layer film, with a single-layer film molding machine having a single extruder at an extrusion temperature of 250°C. The thickness of the single layer film was 200 µm.

### Comparative example 2

A multi-layer structure (film) made of layer (B)/layer (A) was formed in the same manner as Example 1 except that the modified polyolefin (B2) and polyamide (B3) were not used.

### Comparative example 3

A multi-layer structure (film) made of layer (B)/layer (A) was formed in the same manner as Example 1 except that the polyamide (B3) was not used.

### Comparative example 4

A multi-layer structure (film) made of layer (B)/layer (A) was formed in the same manner as Example 1 except that the polyamide (B2) was not used.

### Comparative example 5

A multi-layer structure (film) made of layer (B)/layer (A) was formed in the same manner as Example 3 except that the modified polyolefin (B2) and the polyamide (B3) were not used.

### Comparative example 6

A multi-layer structure (film) made of layer (B)/layer (A) was formed in the same manner as Example 3 except that the added amount of the polyamide (B3) was changed.

### Comparative example 7

A multi-layer structure (film) made of layer (B)/layer (A) was formed in the same manner as Example 3 except that the added amount of the polyamide (B3) was changed.

### Comparative example 8

A multi-layer structure (film) made of layer (B)/layer (A) was formed in the same manner as Example 16 except that the added amount of the polyamide (B3) was changed.

### Comparative example 9

A multi-layer structure (film) made of layer (B)/layer (A) was formed in the same manner as Example 15 except that the added amount of the polyamide (B3) was changed.

### Comparative example 10

A multi-layer structure (film) made of layer (B)/layer (A) was formed in the same manner as Example 20 except that the added amount of the polyamide (B3) was changed.

### Comparative example 11

A multi-layer structure (film) made of layer (B)/layer (A) was formed in the same manner as Example 19 except that 25 parts by mass of the modified polyolefin (B2) and 25 parts by mass of the polyamide (B3) were used per 100 parts by mass of the polyamide (B1).

### Comparative example 12

A multi-layer structure (film) made of layer (B)/layer (A) was formed in the same manner as Example 19 except that 20 parts by mass of the modified polyolefin (B2) and 10 parts by mass of the polyamide (B3) were used per 100 parts by mass of the polyamide (B1).

Various evaluations were conducted for the films obtained in Examples 1-20 and Comparative examples 1-12. The results are shown in Tables 1-3.

**[Table 1]**

| Example | | | 1 | 2 | 3 | 4 | 5 | 6 | 7 | 8 | 9 | 10 |
|---|---|---|---|---|---|---|---|---|---|---|---|---|
| Polyamide composition (A) | Polyamide (A1) | Type | PA12 | PA12 | PA12 | PA12 | PA12 | PA12 | PA12 | PA12 | PA12 | PA1010 |
| | | Parts by mass | 80 | 80 | 80 | 80 | 80 | 80 | 80 | 80 | 80 | 100 |
| | Modified polyolefin (A2) | Type | JSRT 7712SP | JSRT 7712SP | JSRT 7712SP | JSRT 7712SP | JSRT 7712SP | JSRT 7712SP | JSRT 7712SP | JSRT 7712SP | JSRT 7712SP | - |
| | | Parts by mass | 20 | 20 | 20 | 20 | 20 | 20 | 20 | 20 | 20 | - |
| Polyamide composition (B) | Polyamide (B1) | Polyxylylene adipamide | B1-1 | B1-1 | B1-1 | B1-1 | B1-2 | B1-1 | B1-1 | B1-1 | B1-1 | B1-1 |
| | | Parts by mass | 100 | 85 | 70 | 60 | 70 | 70 | 70 | 70 | 70 | 70 |
| | | Polyxylylene sebacamide | - | B1-3 | B1-3 | B1-3 | B1-3 | B1-4 | B1-3 | B1-3 | B1-3 | B1-3 |
| | | Parts by mass | 0 | 15 | 30 | 40 | 30 | 30 | 30 | 30 | 30 | 30 |
| | Modified polyolefin (B2) | Type | Tafmer MH5020 | Tafmer MH5020 | Tafmer MH5020 | Tafmer MH5020 | Tafmer MH5020 | Tafmer MH5020 | Tafmer MH5020 | Tafmer MH5020 | Tafmer MH5020 | Tafmer MH5020 |
| | | Parts by mass | 10 | 10 | 10 | 10 | 10 | 10 | 5 | 10 | 10 | 10 |
| | Polyamide (B3) | Type | PA6-12 | PA6-12 | PA6-12 | PA6-12 | PA6-12 | PA6-12 | PA6-12 | PA6-12 | PA6-12 | PA6-12 |
| | | Parts by mass | 10 | 10 | 10 | 10 | 10 | 10 | 10 | 15 | 5 | 10 |
| Tensile el longation at break of film (%) | | | 350 | 400 | 400 | 400 | 400 | 400 | 400 | 400 | 400 | 400 |
| Evaluation of CE10 barrier performance (Alcohol gasoline permeation preventing property) | | | A | A | A | A | A | A | A | A | A | A |
| Adhesiveness evaluation (Adhesiveness A) | | | Peeled | No peeling | No peeling | No peeling | No peeling | No peeling | No peeling | No peeling | No peeling | No peeling |
| Adhesiveness evaluation after immersion in fuel (Adhesiveness A) | | | Peeled | Peeled | No peeling | No peeling | No peeling | No peeling | No peeling | No peeling | No peeling | No peeling |

**[Table 2]**

| Example | | | 11 | 12 | 13 | 14 | 15 | 16 | 17 | 18 | 19 | 20 |
|---|---|---|---|---|---|---|---|---|---|---|---|---|
| Polyamide composition (A) | Polyamide (A1) | Type | PA11 | PA12 | PA12 | PA11 | PA12 | PA12 | PA12 | PA11 | PA12 | PA12 |
| | | Parts by mass | 100 | 80 | 80 | 100 | 80 | 80 | 80 | 100 | 80 | 80 |
| | Modified polyolefin (A2) | Type | - | JSRT 7712SP | JSRT 7712SP | - | JSRT 7712SP | JSRT 7712SP | JSRT 7712SP | - | JSRT 7712SP | JSRT 7712SP |
| | | Parts by mass | - | 20 | 20 | - | 20 | 20 | 20 | - | 20 | 20 |
| Polyamide composition (B) | Polyamide (B1) | Polyxylylene adipamide | B1-1 | B1-1 | B1-1 | B1-1 | B1-1 | B1-1 | B1-1 | B1-1 | B1-1 | B1-1 |
| | | Parts by mass | 70 | 85 | 70 | 70 | 70 | 70 | 70 | 70 | 70 | 70 |
| | | Polyxylylene sebacamide | B1-3 | B1-3 | B1-3 | B1-3 | B1-3 | B1-3 | B1-3 | B1-3 | B1-3 | B1-3 |
| | | Parts by mass | 30 | 15 | 30 | 30 | 30 | 30 | 30 | 30 | 30 | 30 |
| | Modified polyolefin (B2) | Type | Tafmer MH5020 | Tafmer MH5040 | Apolhya LP-21H | Tafmer MH5020 | Tafiner MH5020 | Tafmer MH5020 | Tafmer MH5020 | Tafmer MH5020 | Tafmer MH5020 | Tafmer MH5020 |
| | | Parts bv mass | 10 | 10 | 10 | 10 | 10 | 10 | 10 | 10 | 10 | 10 |
| | Polyamide (B3) | Type | PA6-12 | PA6-12 | PA6-12 | PA12 | PA12 | PA1010 | PA1010 | PA6 | PA6 | PA6 |
| | | Parts by mass | 10 | 10 | 10 | 10 | 5 | 10 | 5 | 10 | 10 | 5 |
| Tensile elongation at break of film (%) | | | 400 | 400 | 400 | 400 | 250 | 400 | 250 | 400 | 400 | 250 |
| Evaluation of CE10 barrier performance (Alcohol gasoline permeation preventing property) | | | A | A | A | A | A | A | A | A | A | A |
| Adhesiveness evaluation (Adhesiveness A) | | | No peeling | No peeling | No peeling | No peeling | No peeling | No peeling | No peeling | No peeling | No peeling | No peelin |
| Adhesiveness evaluation after immersion in fuel (Adhesiveness A) | | | No peeling | No peeling | Peeled | No peeling | No peeling | No peeling | No peeling | No peeling | No peeling | No peeling |

**[Table 3]**

| Comparative example | | | 1 | 2 | 3 | 4 | 5 | 6 | 7 | 8 | 9 | 10 | 11 | 12 |
|---|---|---|---|---|---|---|---|---|---|---|---|---|---|---|
| Polyamide composition (A) | Polyamide (A1) | Type | PA12 | PA12 | PA12 | PA12 | PA12 | PA12 | PA12 | PA12 | PA12 | PA12 | PA12 | PA12 |
| | | Parts by mass | 80 | 80 | 80 | 80 | 80 | 80 | 80 | 80 | 80 | 80 | 80 | 80 |
| | Modified polyolefin (A2) | Type | JSRT 7712SP | JSRT 7712SP | JSRT 7712SP | JSRT 7712SP | JSRT 7712SP | JSRT 7712SP | JSRT 7712SP | JSRT 7712SP | JSRT 7712SP | JSRT 7712SP | JSRT 7712SP | JSRT 7712SP |
| | | Parts by mass | 20 | 20 | 20 | 20 | 20 | 20 | 20 | 20 | 20 | 20 | 20 | 20 |
| Polyamide composition (B) | Polyamide (B1) | Polyxylylene adipamide | - | B1-1 | B1-1 | B1-1 | B1-1 | B1-1 | B1-1 | B1-1 | B1-1 | B1-1 | B1-1 | B1-1 |
| | | Parts by mass | - | 100 | 100 | 100 | 70 | 70 | 70 | 70 | 70 | 70 | 70 | 70 |
| | | Polyxylylene sebacamide | - | - | - | - | Bl-3 | B1-3 | B1-3 | B1-3 | B1-3 | B1-3 | B1-3 | B1-3 |
| | | Parts by mass | - - | 0 | 0 | 0 | 30 | 30 | 30 | 30 | 30 | 30 | 30 | 30 |
| | Modified polyolefin (B2) | Type | - | - | Tafmer MH5020 | - | - | Tafmer MH5020 | Tafmer MH5020 | Tafmer MH5020 | Tafmer MH5020 | Tafmer MH5020 | Tafmer MH5020 | Tafmer MH5020 |
| | | Parts by mass | - | 0 | 10 | 0 | 0 | 10 | 10 | 10 | 10 | 10 | 25 | 20 |
| | Polyamide (B3) | Type | | - | - | PA6-12 | - | PA6-12 | PA6-12 | PA1010 | PA12 | PA6 | PA6 | PA6 |
| | | Parts by mass | - | 0 | 0 | 10 | 0 | 3 | 25 | 3 | 3 | 3 | 25 | 10 |
| Tensile elongation at break of film (%) | | | 400 | 20 | 50 | 50 | 20 | 200 | 400 | 90 | 90 | 90 | 400 | Failure in film formation |
| Evaluation of CE10 barrier performance (Alcohol gasoline permeation preventing property) | | | B | A | A | A | A | A | B | A | A | A | B | Failure in film formation |
| Adhesiveness evaluation (Adhesiveness A) | | | No interface | Peeled | Peeled | Peeled | No peeling | No peeling | No peeling | No peeling | No peeling | No peeling | No peeling | Failure in film formation |
| Adhesiveness evaluation after immersion in CE10 (Adhesiveness A) | | | No interface | Peeled | Peeled | Peeled | No peeling | No peeling | No peeling | No peeling | No peeling | No peeling | No peeling | Failure in film formation |

As can be appreciated from Tables 1 and 2, the multi-layer structure according to the present invention has high tensile elongation at break of the film and excellent flexibility as well as excellent gas barrier performance (Examples 1-20). Moreover, use of polyxylylene adipamide and polyxylylene sebacamide at the predetermined weight ratios as the polyamide (B1) constituting the polyamide layer (B) is found to further result excellent interlayer adhesiveness and chemical resistance (Examples 2-20).

On the other hand, as can be appreciated from Table 3, gas barrier performance could not be acquired with the polyamide layer (A) only (Comparative example 1), and flexibility could not be acquired when the polyamide layer (B) lacked either the modified polyolefin (B2) or the polyamide (B3) (Comparative examples 2-5). In addition, when the composition ratio of the polyamide (B1), the modified polyolefin (B2) and the polyamide (B3) of the polyamide layer (B) was out of the range defined by the present invention, problems occurred such as gas barrier performance was not obtained, tensile elongation at break was not 250% or higher, or film formation was impaired (Comparative examples 6-12).

Next, embodiments in which a conductive filler was blended in the polyamide composition (B) were carried out using the compositions shown in Tables 4-7 for Examples, Reference examples and Comparative examples as follows, to compare the results thereof.

### Example 21

### <Production of polyamide composition (A)>

polyamide 12 (from Ube Industries, UBESTA3030U, relative viscosity 2.27) was used alone.

### <Production of polyamide composition (B)>

85 parts by mass of the polyamide (B1-1) obtained in Production example 1 and 15 parts by mass of the polyamide (B1-3) obtained in Production example 3, i.e., a total of 100 parts by mass, were used as the polyamide (B1), with which 10 parts by mass of a 1 wt% maleic anhydride-modified ethylene/butene copolymer (from Mitsui Chemicals, Tafmer MH5020) as the modified polyolefin (B2), 15 parts by mass of polyamide 6 (from Ube Industries, 1024B) as the polyamide (B3), and 5 parts by mass of a carbon nanotube (from Arkema, Graphistrength C100, written as "CNT" in the tables) as the conductive filler (B4) were mixed in advance. The resultant was supplied into a twin-screw extruder that had a screw diameter of ϕ37 mm and that was equipped with a kneading disc, and melt kneaded at a cylinder temperature of 240-260°C. Here, polyamide 6 and the carbon nanotube were mixed and made into masterbatch before mixing with the polyamide (B1) and the modified polyolefin (B2).

After extruding the molten resin into a strand, the resultant was introduced into a water tank, cooled, cut and vacuum dried, thereby obtaining pellets of the polyamide composition (B).

### <Production of multi-layer structure>

The polyamide composition (A) for forming a polyamide layer (A) and the polyamide composition (B) for forming the polyamide layer (B) were used to form a multi-layer structure (film) made of layer (B)/layer (A) with a multi-layer film molding machine equipped with two extruders at a layer (A) extruding temperature of 240°C, a layer (B) extruding temperature of 280°C and a flow channel temperature of 280°C after the lamination. Here, the layer (B) was the inner layer. The thickness of the layer (A) was 40 µm and the thickness of the layer (B) was 160 µm.

### <Production of tube>

The polyamide composition (A) for forming a polyamide layer (A) and the polyamide composition (B) for forming the polyamide layer (B) were used to form a multi-layer tube (outer diameter: 8 mm, inner diameter: 6 mm) made of layer (B)/layer (A) with a multi-layer tube molding machine equipped with two extruders at a layer (A) extruding temperature of 240°C, a layer (B) extruding temperature of 280°C and a flow channel temperature of 280°C after the lamination. Here, the layer (B) was the inner layer. The thickness of the layer (A) was 900 µm and the thickness of the layer (B) was 100 µm.

### Examples 22-27

### <Production of polyamide composition (A)>

Polyamide 12 (from Ube Industries, UBESTA3030U, relative viscosity 2.27) was used alone.

### <Production of polyamide composition (B)>

Pellets of the respective polyamide compositions (B) were obtained in the same manner as Example 21 except that polyamides (B1) obtained by blending the respective polyamides obtained in Production examples 1-4 at the composition ratios indicated in Table 4 were used and mixed with a 1 wt% maleic anhydride-modified ethylene/butene copolymer (from Mitsui Chemicals, Tafmer MH5020) as the modified polyolefin (B2), polyamide 6 (from Ube Industries, 1024B) as the polyamide (B3), and a carbon nanotube (from Arkema, Graphistrength C100) as the conductive filler (B4) at the composition ratios indicated in Table 4.

### <Production of multi-layer structure>

The resulting polyamide compositions (A) and (B) were used to form a multi-layer structure (film) made of layer (B)/layer (A) in the same manner as Example 21. The thickness of the layer (A) was 40 µm and the thickness of the layer (B) was 160 µm.

### <Production of tube>

The resulting polyamide compositions (A) and (B) were used to form a multi-layer tube (outer diameter: 8mm, inner diameter: 6mm) made of layer (B)/layer (A) in the same manner as Example 21. Here, the layer (B) was the inner layer. The thickness of the layer (A) was 900 µm and the thickness of the layer (B) was 100 µm.

### Example 28

A multi-layer structure (film) and a multi-layer tube were formed in the same manner as Example 22 except that polyamide 10,10 (from Arkema, "Rilsan" TESN P213TL) was used alone as the polyamide composition (A).

### Example 29

A multi-layer structure (film) and a multi-layer tube were formed in the same manner as Example 22 except that polyamide 11 (from Arkema, "Rilsan" BESN P20TL) was used alone as the polyamide composition (A).

### Example 30

A multi-layer structure (film) and a multi-layer tube were formed in the same manner as Example 21 except that 10 parts by mass of a 2 wt% maleic anhydride-modified ethylene/butene copolymer (from Mitsui Chemicals, Tafmer MH5040) was used as the modified polyolefin (B2).

### Example 31

A multi-layer structure (film) and a multi-layer tube were formed in the same manner as Example 22 except that 10 parts by mass of a polyolefin graft-modified with a polyamide (from ARKEMA, APOLHYA LP-21H) was used as the modified polyolefin (B2).

### Example 32

A multi-layer structure (film) and a multi-layer tube were formed in the same manner as Example 21 except that 10 parts by mass of a 2 wt% maleic anhydride-modified ethylene/butene copolymer (from Mitsui Chemicals, Tafmer MH5040) as the modified polyolefin (B2) and 15 parts by mass of polyamide 12 (from Ube Industries, UBESTA3030U, relative viscosity 2.27) as the polyamide (B3) were used.

### Example 33

A multi-layer structure (film) and a multi-layer tube were formed in the same manner as Example 22 except that 15 parts by mass of polyamide 12 (from Ube Industries, UBESTA3030U, relative viscosity 2.27) was used as the polyamide (B3).

### Example 34

A multi-layer structure (film) and a multi-layer tube were formed in the same manner as Example 22 except that 6 parts by mass of polyamide 12 (from Ube Industries, UBESTA3030U, relative viscosity 2.27) as the polyamide (B3) and 2 parts by mass of a carbon nanotube (from Arkema, Graphistrength C100) were used.

### Example 35

A multi-layer structure (film) and a multi-layer tube were formed in the same manner as Example 22 except that polyamide 11 (from Arkema, "Rilsan" BESN P20TL) was used alone as the polyamide composition (A), and 15 parts by mass of polyamide 12 (from Ube Industries, UBESTA3030U, relative viscosity 2.27) was used as the polyamide (B3).

### Example 36

A multi-layer structure (film) and a multi-layer tube were formed in the same manner as Example 22 except that polyamide 10,10 (from Arkema, "Rilsan" TESN P213TL) was used alone as the polyamide composition (A), and 15 parts by mass of polyamide 12 (from Ube Industries, UBESTA3030U, relative viscosity 2.27) was used as the polyamide (B3).

### Reference example 1

A multi-layer structure (film) and a multi-layer tube made of layer (B)/layer (A) were formed in the same manner as Example 22 except that 16 parts by mass of polyamide 12 (from Ube Industries, UBESTA3030U, relative viscosity 2.27) as the polyamide (B3), and 4 parts by mass of graphite (from Showa Denko, UF-G) as the conductive filler (B4) were used.

### Reference example 2

A multi-layer structure (film) and a multi-layer tube made of layer (B)/layer (A) were formed in the same manner as Example 22 except that 16 parts by mass of polyamide 12 (from Ube Industries, UBESTA3030U, relative viscosity 2.27) as the polyamide (B3), and 4 parts by mass of carbon black (from CABOT, VULCAN P Carbon Black, written as "CB" in the tables) as the conductive filler (B4) were used.

### Comparative example 13

Polyamide 12 (from Ube Industries, UBESTA3030U, relative viscosity 2.27) was used alone to form a single-layer film with a single-layer film molding machine having a single extruder at an extrusion temperature of 250°C. The thickness of the single layer film was 200 µm.

Polyamide 12 (from Ube Industries, UBESTA3030U, relative viscosity 2.27) was used alone to form a single-layer tube with a tube molding machine having a single extruder. The thickness of the layer was 1000 µm.

### Comparative example 14

A multi-layer structure (film) and a multi-layer tube made of layer (B)/layer (A) were formed in the same manner as Example 21 except that the polyamide (B1-1) obtained in Production example 1 was used alone as the polyamide (B1), and the modified polyolefin (B2) was not used.

### Comparative example 15

A multi-layer structure (film) and a multi-layer tube made of layer (B)/layer (A) were formed in the same manner as Example 22 except that 3.75 parts by mass of polyamide 6 (from Ube Industries, 1024B) as the polyamide (B3) and 1.25 parts by mass of a carbon nanotube (from Arkema, Graphistrength C100) as the conductive filler (B4) were used.

### Comparative example 16

A multi-layer structure (film) and a multi-layer tube made of layer (B)/layer (A) were formed in the same manner as Example 22 except that 45 parts by mass of polyamide 6 (from Ube Industries, 1024B) as the polyamide (B3) and 15 parts by mass of a carbon nanotube (from Arkema, Graphistrength C100) as the conductive filler (B4) were used.

### Comparative example 17

A multi-layer structure (film) and a multi-layer tube made of layer (B)/layer (A) were formed in the same manner as Example 22 except that 3.75 parts by mass of polyamide 12 (from Ube Industries, UBESTA3030U, relative viscosity 2.27) as the polyamide (B3) and 1.25 parts by mass of a carbon nanotube (from Arkema, Graphistrength C100) as the conductive filler (B4) were used.

### Comparative example 18

A multi-layer structure (film) and a multi-layer tube made of layer (B)/layer (A) were formed in the same manner as Example 22 except that 45 parts by mass of polyamide 12 (from Ube Industries, UBESTA3030U, relative viscosity 2.27) as the polyamide (B3) and 15 parts by mass of a carbon nanotube (from Arkema, Graphistrength C100) as the conductive filler (B4) were used.

### Comparative example 19

An attempt was made to form a multi-layer structure (film) and a multi-layer tube made of layer (B)/layer (A) in the same manner as Example 22 except that 80 parts by mass of polyamide 12 (from Ube Industries, UBESTA3030U, relative viscosity 2.27) as the polyamide (B3) and 20 parts by mass of graphite (from Showa Denko, UF-G) as the conductive filler (B4) were used.

### Comparative example 20

An attempt was made to form a multi-layer structure (film) and a multi-layer tube made of layer (B)/layer (A) in the same manner as Example 22 except that 80 parts by mass of polyamide 12 (from Ube Industries, UBESTA3030U, relative viscosity 2.27) as the polyamide (B3) and 20 parts by mass of carbon black (from CABOT, VULCAN P Carbon Black) as the conductive filler (B4) were used.

### Comparative example 21

A multi-layer structure (film) and a multi-layer tube made of layer (B)/layer (A) were formed in the same manner as Example 22 except that 20 parts by mass of a 1 wt% maleic anhydride-modified ethylene/butene copolymer (from Mitsui Chemicals, Tafmer MH5020) was used as the modified polyolefin (B2).

### Example 37

### <Production of polyamide composition (A)>

Polyamide 12 (from Ube Industries, UBESTA3030U, relative viscosity 2.27) was used alone.

### <Production of polyamide composition (B)>

70 parts by mass of the polyamide (B1-1) obtained in Production example 1 and 30 parts by mass of the polyamide (B1-3) obtained in Production example 3, i.e., a total of 100 parts by mass, were used as the polyamide (B1), with which 10 parts by mass of a 1 wt% maleic anhydride-modified ethylene/butene copolymer (from Mitsui Chemicals, Tafmer MH5020) as the modified polyolefin (B2) and 10 parts by mass of polyamide 6,12 (from Ube Industries, "UBE nylon" 7034B) as the polyamide (B3) were mixed. The resultant was supplied into a twin-screw extruder that had a screw diameter of ϕ37 mm and that was equipped with a kneading disc, and melt kneaded at a cylinder temperature of 240-260°C.

After extruding the molten resin into a strand, the resultant was introduced into a water tank, cooled, cut and vacuum dried, thereby obtaining pellets of the polyamide composition (B).

### <Production of polyamide composition (B')>

70 parts by mass of the polyamide (B1-1) obtained in Production example 1 and 30 parts by mass of the polyamide (B1-3) obtained in Production example 3, i.e., a total of 100 parts by mass, were used as the polyamide (B1), with which 10 parts by mass of a 1 wt% maleic anhydride-modified ethylene/butene copolymer (from Mitsui Chemicals, Tafmer MH5020) as the modified polyolefin (B2), 15 parts by mass of polyamide 12 (from Ube Industries, UBESTA3030U, relative viscosity 2.27) as the polyamide (B3), and 5 parts by mass of a carbon nanotube (from Arkema, Graphistrength C100) as the conductive filler (B4) were mixed in advance. The resultant was supplied into a twin-screw extruder that had a screw diameter of ϕ37 mm and that was equipped with a kneading disc, and melt kneaded at a cylinder temperature of 240-260°C. Here, polyamide 12 and the carbon nanotube were mixed and made into masterbatch before mixing with the polyamide (B1) and the modified polyolefin (B2).

After extruding the molten resin into a strand, the resultant was introduced into a water tank, cooled, cut and vacuum dried, thereby obtaining pellets of the polyamide composition (B').

### <Production of multi-layer structure>

The polyamide composition (A) for forming a polyamide layer (A), the polyamide composition (B) for forming a polyamide layer (B) and the polyamide composition (B') for forming a polyamide layer (B') were used to form a multi-layer structure (film) made of layer (B')/layer (B)/layer (A) with a multi-layer film molding machine equipped with three extruders at a layer (A) extruding temperature of 240°C, a layer (B) extruding temperature of 280°C, a layer (B') extruding temperature of 280°C and a flow channel temperature of 280°C after the lamination. The thickness of the layer (A) was 40 µm, the thickness of the layer (B) was 140 µm, and the thickness of the layer (B') was 20 µm.

### <Production of tube>

The polyamide composition (A) for forming a polyamide layer (A), the polyamide composition (B) for forming a polyamide layer (B) and the polyamide composition (B') for forming a polyamide layer (B') were used to form a multi-layer tube (outer diameter: 8 mm, inner diameter: 6 mm) made of layer (B')/layer (B)/layer (A) with a multi-layer tube molding machine equipped with three extruders at a layer (A) extruding temperature of 240°C, a layer (B) extruding temperature of 280°C, a layer (B') extruding temperature of 280°C and a flow channel temperature of 280°C after the lamination. Here, the layer (B') was the innermost layer. The thickness of the layer (A) was 800 µm, the thickness of the layer (B) was 100 µm and the thickness of the layer (B') was 100 µm.

The films and the tubes obtained in Examples 21-37, Reference examples 1 and 2 and Comparative examples 13-21 were used for various evaluations. Their results are shown in Tables 4-7.

**Table 4]**

| Example | | | 21 | 22 | 23 | 24 | 25 | 26 | 27 | 28 | 29 | 30 |
|---|---|---|---|---|---|---|---|---|---|---|---|---|
| Polyamide composition (A) | Polyamide (A1) | Type | PA12 | PA12 | PA12 | PA12 | PA12 | PA12 | PA12 | PA1010 | PA11 | PA12 |
| Polyamide composition (B) | Polyamide (B1) | Polyxylylene adipamide | B1-1 | B1-1 | B1-1 | B1-2 | B1-1 | B1-1 | B1-1 | B1-1 | B1-1 | B1-1 |
| | | Parts by mass | 85 | 70 | 60 | 70 | 70 | 70 | 70 | 70 | 70 | 85 |
| | Modified polyolefin (B2) | Polyxylylene sebacamide | B1-3 | B1-3 | B1-3 | B1-3 | B1-4 | B1-3 | B1-3 | B1-3 | B1-3 | B1-3 |
| | | Parts by mass | 15 | 30 | 40 | 30 | 30 | 30 | 30 | 30 | 30 | 15 |
| | | Type | Tafmer MH5020 | Tafmer MH5020 | Tafmer MH5020 | Tafmer MH5020 | Tafmer MH5020 | Tafmer MH5020 | Tafmer MH5020 | Tafmer MH5020 | Tafmer MH5020 | Tafmer MH5040 |
| | | Parts by mass | 10 | 10 | 10 | 10 | 10 | 5 | 10 | 10 | 10 | 10 |
| | Polyamide (B3) | Type | PA6 | PA6 | PA6 | PA6 | PA6 | PA6 | PA6 | PA6 | PA6 | PA6 |
| | | Parts bv mass | 15 | 15 | 15 | 15 | 15 | 15 | 6 | 15 | 15 | 15 |
| | Conductive filler (B4) | Type | CNT | CNT | CNT | CNT | CNT | CNT | CNT | CNT | CNT | CNT |
| | | Parts by mass | 5 | 5 | 5 | 5 | 5 | 5 | 2 | 5 | 5 | 5 |
| Tensile elongation at break of film (%) | | | 300 | 300 | 300 | 300 | 300 | 350 | 350 | 300 | 300 | 300 |
| Evaluation ot surface resistance of film | | | A | A | A | A | A | A | A | A | A | A |
| Evaluation of CE10 barrier performance (Alcohol gasoline permeation preventing property) | | | A | A | A | A | A | A | A | A | A | A |
| Adhesiveness evaluation (Adhesiveness B) | | | No peeling | No peeling | No peeling | No peeling | No peeling | No peeling | No peeling | No peeling | No peeling | No peeling |
| Adhesiveness evaluation after immersion in fuel (Adhesiveness B) | | | Peeled | No peeling | No peeling | No peeling | No peeling | No peeling | No peeling | No peeling | No peeling | No peeling |
| Low-temperature impact resistance evaluation (-20°C) | | | 0/10 | 0/10 | 0/10 | 0/10 | 0/10 | 0/10 | 0/10 | 0/10 | 0/10 | 0/10 |
| Low-temperature impact resistance evaluation (-40°C) | | | 5/10 | 5/10 | 5/10 | 5/10 | 5/10 | 5/10 | 0/10 | 5/10 | 5/10 | 5/10 |

**[Table 5]**

| Example | | | 31 | 32 | 33 | 34 | 35 | 36 | Reference example 1 | Reference example 2 |
|---|---|---|---|---|---|---|---|---|---|---|
| Polyamide composition (A) | Polyamide (A1) | Type | PA12 | PA12 | PA12 | PA12 | PA11 | PA1010 | PA12 | PA12 |
| Polyamide composition (B) | Polyamide (B1) | Polyxylylene adipamide | B1-1 | B1-1 | B1-1 | B1-2 | B1-1 | B1-1 | B1-1 | B1-1 |
| | | Parts bv mass | 70 | 85 | 70 | 70 | 70 | 70 | 70 | 70 |
| | Modified polyolefin (B2) | Polyxylylene sebacamide | B1-3 | B1-3 | B1-3 | B1-3 | B1-3 | B1-3 | B1-3 | B1-3 |
| | | Parts by mass | 30 | 15 | 30 | 30 | 30 | 30 | 30 | 30 |
| | | Type | Apolhya LP-21H | Tafmer MH5040 | Tafmer MH5020 | Tafmer MH5020 | Tafmer MH5020 | Tafmer MH5020 | Tafmer MH5020 | Tafmer MH5020 |
| | | Parts by mass | 10 | 10 | 10 | 10 | 10 | 10 | 10 | 10 |
| | Polyamide (B3) | Type | PA6 | PA12 | PA12 | PA12 | PA12 | PA12 | PA12 | PA12 |
| | | Parts by mass | 15 | 15 | 15 | 6 | 15 | 15 | 16 | 16 |
| | Conductive filler (B4) | Type | CNT | CNT | CNT | CNT | CNT | CNT | Graphite | CB |
| | | Parts by mass | 5 | 5 | 5 | 2 | 5 | 5 | 4 | 4 |
| Tensile elongation at break of film (%) | | | 300 | 300 | 300 | 350 | 300 | 300 | 200 | 200 |
| Evaluation of surface resistance of film | | | A | A | A | A | A | A | B | B |
| Evaluation of CE10 barrier performance (Alcohol gasoline permeation preventing property) | | | A | A | A | A | A | A | A | A |
| Adhesiveness evaluation (Adhesiveness B) | | | No peeling | No peeling | No peeling | No peeling | No peeling | No peeling | No peeling | No peeling |
| Adhesiveness evaluation after immersion in fuel (Adhesiveness B) | | | Peeled | No peeling | No peeling | No peeling | No peeling | No peeling | No peeling | No peeling |
| Low-temperature impact resistance evaluation (-20°C) | | | 0/10 | 0/10 | 0/10 | 30/10 | 0/10 | 0/10 | 10/10 | 10/10 |
| Low-temperature impact resistance evaluation (-40°C) | | | 0/10 | 0/10 | 0/10 | 0/10 | 0/10 | 0/10 | 10/10 | 10/10 |

**[Table 6]**

| Comparative exam ple | | | 13 | 14 | 15 | 16 | 17 | 18 | 19 | 20 | 21 |
|---|---|---|---|---|---|---|---|---|---|---|---|
| Polyamide composition (A) | Polyamide (A1) | Type | PA12 | PA12 | PA12 | PA12 | PA12 | PA12 | PA12 | PA12 | PA12 |
| Polyamide composition (B) | Polyamide (B1) | Polyxylylene adipamide | - | B1-1 | B1-1 | B1-1 | B1-1 | B1-1 | B1-1 | B1-1 | B1-1 |
| | | Parts by mass | - | 100 | 70 | 70 | 70 | 70 | 70 | 70 | 70 |
| | Modified polyolefin (B2) | Polyxylylene sebacamide | - | - | B1-3 | B1-3 | B1-3 | B1-3 | B1-3 | B1-3 | B1-3 |
| | | Parts by mass | - | - | 30 | 30 | 30 | 30 | 30 | 30 | 30 |
| | | Type | - | - | Tafmer MH5020 | Tafmer MH5020 | Tafmer MH5020 | Tafmer MH5020 | Tafmer MH5020 | Tafmer MH5020 | Tafmer MH5020 |
| | | Parts by mass | - | - | 10 | 10 | 10 | 10 | 10 | 10 | 20 |
| | Polyamide (B3) | Type | - | PA6 | PA6 | PA6 | PA12 | PA12 | PA12 | PA12 | PA6 |
| | | Parts by mass | - | 15 | 3.75 | 45 | 3.75 | 45 | 80 | 80 | 15 |
| | Conductive filler (B4) | Type | - | CNT | CNT | CNT | CNT | CNT | Graphite | CB | CNT |
| | | Parts by mass | - | 5 | 1.25 | 15 | 1.25 | 15 | 20 | 20 | 5 |
| Tensile elongation at break of film (%) | | | 400 | 10 | 50 | 50 | 50 | 50 | Molding failure | Molding failure | Molding failure |
| Evaluation of surface resistance of film | | | B | A | B | A | A | A | Molding failure | Molding failure | Molding failure |
| Evaluation of CE10 barrier performance (Alcohol gasoline permeation preventing property) | | | B | A | A | B | A | B | Molding failure | Molding failure | Molding failure |
| Adhesiveness evaluation (Adhesiveness B) | | | - | Peeled | No peeling | No peeling | No peeling | No peeling | Molding failure | Molding failure | Molding failure |
| Adhesiveness evaluation after immersion in fuel (Adhesiveness B) | | | - | Peeled | No peeling | No peeling | No peeling | No peeling | Molding failure | Molding failure | Molding failure |
| Low-temperature impact resistance evaluation (-20°C) | | | 0/10 | 10/10 | 0/10 | 10/10 | 0/10 | 10/10 | Molding failure | Molding failure | Molding failure |
| Low-temperature impact resistance evaluation (-40°C) | | | 0/10 | 10/10 | 0/10 | 10/10 | 0/10 | 10/10 | Molding failure | Molding failure | Molding failure |

**[Table 7]**

| Example | | | 37 |
|---|---|---|---|
| Polyamide composition (A) | Polyamide (A1) | Type | PA12 |
| Polyamide composition (B) | Polyamide (B1) | Polyxylylene adipamide | B1-1 |
| | | Parts by mass | 70 |
| | | Polyxylylene sebacamide | B1-3 |
| | | Parts by mass | 30 |
| | Modified polyolefin (B2) | Type | Tafmer MH5020 |
| | | Parts by mass | 10 |
| | Polyamide (B3) | Type | PA6-12 |
| | | Parts by mass | 10 |
| | Conductive filler (B4) | Type | - |
| | | Parts by mass | - |
| Polyamide composition (B)' | Polyamide (B1) | Polyxylylene adipamide | B1-1 |
| | | Parts by mass | 70 |
| | | Polyxylylene sebacamide | BI-3 |
| | | Parts by mass | 30 |
| | Modified polyolefin (B2) | Type | Tafmer MH5020 |
| | | Parts by mass | 10 |
| | Polyamide (B3) | Type | PA12 |
| | | Parts by mass | 15 |
| | Conductive filler (B4) | Type | CNT |
| | | Parts by mass | 5 |
| Tensile elongation at break of film (%) | | | 300 |
| Evaluation of surface resistance of film | | | A |
| Evaluation of CE10 barrier performance (Alcohol gasoline permeation preventing property) | | | A |
| Adhesiveness evaluation (Adhesiveness B) | | | No peeling |
| Adhesiveness evaluation after immersion in fuel (Adhesiveness B) | | | No peeling |
| Low-temperallre impact resistance evaluation (-20°C) | | | 0/10 |
| Low-temperature impact resistance evaluation (-40°C) | | | 0/10 |

As can be appreciated from Tables 4, 5 and 7, the multi-layer structure according to the present invention has high tensile elongation at break of the film and excellent flexibility as well as excellent gas barrier performance (Examples 21-37). Moreover, use of polyxylylene adipamide and polyxylylene sebacamide at the predetermined weight ratios as the polyamide (B1) constituting the polyamide layer (B) is found to further result excellent interlayer adhesiveness and chemical resistance (Examples 22-37). Furthermore, blending of a carbon nanotube as the conductive filler (B4) can impart an antistatic property to the multi-layer structure according to the present invention without impairing the low-temperature impact resistance (Examples 21-37). When a conductive filler other than a carbon nanotube was blended, the antistatic property and the low-temperature impact resistance were insufficient (Reference examples 1 and 2).

On the other hand, as can be appreciated from Table 6, gas barrier performance could not be acquired with the polyamide layer (A) only (Comparative example 13), and flexibility could not be acquired when the polyamide layer (B) lacked the modified polyolefin (B2) (Comparative example 14). In addition, when the composition ratio of the polyamide (B1), the modified polyolefin (B2) and the polyamide (B3) of the polyamide layer (B) was out of the range defined by the present invention, problems occurred such as gas barrier performance was not obtained, tensile elongation at break was not 250% or higher, or film formation was impaired (Comparative examples 15-18 and 21). Moreover, when the composition ratio of the polyamide (B1), the modified polyolefin (B2) and the polyamide (B3) of the polyamide layer (B) was out of the range defined by the present invention and carbon black or graphite was used as the conductive filler, the low-temperature impact resistance was deteriorated and film formation was impaired in some cases (Comparative examples 19 and 20).

### INDUSTRIAL APPLICABILITY

Since the multi-layer structure of the present invention has excellent flexibility, chemical resistance and gas barrier performance, it can favorably be used as a piping material for fuel transportation or as a fuel storage vessel. In particular, the multi-layer structure of the present invention can favorably be used as a pipe, a hose or a tube for fuel transportation or the like.

## Claims

1. A multi-layer structure comprising a polyamide layer (A) and a polyamide layer (B), wherein:
the polyamide layer (A) is made from a polyamide composition (A) comprising at least one polyamide (A1) selected from the group consisting of a polyamide (a1) containing at least either one of a C10-C12 lactam-derived constituent unit and a C10-C12 aminocarboxylic acid-derived constituent unit, and a polyamide (a2) containing a C6-C12 aliphatic diamine-derived constituent unit and a C10-C12 aliphatic dicarboxylic acid-derived constituent unit; and
the polyamide layer (B) is made from a polyamide composition (B) comprising: a polyamide (B1) including a diamine unit containing 70 mol% or more of a xylylenediamine-derived constituent unit and a dicarboxylic acid unit containing 70 mol% or more of a C4-C12 aliphatic dicarboxylic acid-derived constituent unit; a modified polyolefin (B2); and at least one polyamide (B3) selected from the group consisting of a polyamide (b1) containing at least either one of a C6-C12 lactam-derived constituent unit and a C6-C12 aminocarboxylic acid-derived constituent unit, and a polyamide (b2) containing a C6-C12 aliphatic diamine-derived constituent unit and a C10-C12 aliphatic dicarboxylic acid-derived constituent unit, where the content of the modified polyolefin (B2) is 5-15 parts by mass and the content of the polyamide (B3) is 5-20 parts by mass per 100 parts by mass of the polyamide (B1).

2. The multi-layer structure according to Claim 1, wherein the C4-C12 aliphatic dicarboxylic acid is adipic acid, sebacic acid or a mixture thereof.

3. The multi-layer structure according to either one of Claims 1 and 2, wherein the xylylenediamine is meta-xylylenediamine, para-xylylenediamine or a mixture thereof.

4. The multi-layer structure according to any one of Claims 1-3, wherein the polyamide (B1) is polyxylylene adipamide, polyxylylene sebacamide or a mixture thereof.

5. The multi-layer structure according to any one of Claims 1-4, wherein the polyamide (B1) is a mixture of polyxylylene adipamide and polyxylylene sebacamide, where the mass ratio of polyxylylene adipamide and polyxylylene sebacamide (polyxylylene adipamide: polyxylylene sebacamide) is 55:45-85:15.

6. The multi-layer structure according to any one of Claims 1-5, wherein the modified polyolefin (B2) is at least one selected from the group consisting of maleic anhydride-modified polyethylene, a maleic anhydride-modified α-olefin copolymer and a polyolefin graft-modified with an aliphatic polyamide.

7. The multi-layer structure according to any one of Claims 1-6, wherein the polyamide (B3) is at least one selected from the group consisting of polyamide 6, polyamide 6,12, polyamide 10,10, polyamide 11 and polyamide 12.

8. The multi-layer structure according to any one of Claims 1-7, wherein the polyamide composition (A) further comprises a modified polyolefin (A2).

9. The multi-layer structure according to any one of Claims 1-8, wherein the polyamide composition (B) further comprises a carbon nanotube (B4).

10. The multi-layer structure according to Claim 9, wherein the content of the carbon nanotube (B4) is 1.5-10 parts by mass per 100 parts by mass of the polyamide (B1).

11. The multi-layer structure according to any one of Claims 1-10, which is in a form of a pipe, a hose or a tube.

12. The multi-layer structure according to any one of Claims 1-11, which is used for fuel transportation.

## Patentansprüche

1. Eine mehrschichtige Struktur, umfassend eine Polyamidschicht (A) und eine Polyamidschicht (B), wobei:
die Polyamidschicht (A) aus einer Polyamidzusammensetzung (A) besteht, umfassend mindestens ein Polyamid (A1), ausgewählt aus der Gruppe bestehend aus einem Polyamid (a1), enthaltend mindestens eine aus einer von einem C10-C12-Lactam abgeleiteten konstituierenden Einheit und einer von einer C10-C12-Aminocarbonsäure abgeleiteten konstituierenden Einheit, und einem Polyamid (a2), enthaltend eine von einem aliphatischen C6-C12-Diamin abgeleitete konstituierende Einheit und eine von einer aliphatischen C10-C12-Dicarbonsäure abgeleitete konstituierende Einheit; und
die Polyamidschicht (B) aus einer Polyamidzusammensetzung (B) besteht, umfassend: ein Polyamid (B1), beinhaltend eine Diamineinheit, enthaltend 70 Mol-% oder mehr einer von einem Xylylendiamin abgeleiteten konstituierenden Einheit, und eine Dicarbonsäureeinheit, enthaltend 70 Mol-% oder mehr einer von einer aliphatischen C4-C12-Dicarbonsäure abgeleiteten konstituierenden Einheit; ein modifiziertes Polyolefin (B2); und mindestens ein Polyamid (B3), ausgewählt aus der Gruppe bestehend aus einem Polyamid (b1), enthaltend mindestens eine aus einer von einem C6-C12-Lactam abgeleiteten konstituierenden Einheit und einer von einer C6-C12-Aminocarbonsäure abgeleiteten konstituierenden Einheit, und einem Polyamid (b2), enthaltend eine von einem aliphatischen C6-C12-Diamin abgeleitete konstituierende Einheit und eine von einer aliphatischen C10-C12-Dicarbonsäure abgeleitete konstituierende Einheit, wobei der Gehalt des modifizierten Polyolefins (B2) 5-15 Massenteile beträgt und der Gehalt des Polyamids (B3) 5-20 Massenteile pro 100 Massenteile des Polyamids (B1) beträgt.

2. Die mehrschichtige Struktur nach Anspruch 1, wobei die aliphatische C4-C12-Dicarbonsäure Adipinsäure, Sebacinsäure oder ein Gemisch davon ist.

3. Die mehrschichtige Struktur nach einem der Ansprüche 1 und 2, wobei das Xylylendiamin meta-Xylylendiamin, para-Xylylendiamin oder ein Gemisch davon ist.

4. Die mehrschichtige Struktur nach einem der Ansprüche 1-3, wobei das Polyamid (B1) Polyxylylenadipamid, Polyxylylensebacamid oder ein Gemisch davon ist.

5. Die mehrschichtige Struktur nach einem der Ansprüche 1-4, wobei das Polyamid (B1) ein Gemisch von Polyxylylenadipamid und Polyxylylensebacamid ist, wobei das Massenverhältnis von Polyxylylenadipamid und Polyxylylensebacamid (Polyxylylenadipamid:Polyxylylensebacamid) 55:45-85:15 beträgt.

6. Die mehrschichtige Struktur nach einem der Ansprüche 1-5, wobei das modifizierte Polyolefin (B2) mindestens eines, ausgewählt aus der Gruppe bestehend aus Maleinsäureanhydrid-modifziertem Polyethylen, einem Maleinsäureanhydridmodifzierten α-Olefin-Copolymer und einem mit einem aliphatischen Polyamid pfropfmodifizierten Polyolefin, ist.

7. Die mehrschichtige Struktur nach einem der Ansprüche 1-6, wobei das Polyamid (B3) mindestens eines, ausgewählt aus der Gruppe bestehend aus Polyamid 6, Polyamid 6,12, Polyamid 10,10, Polyamid 11 und Polyamid 12, ist.

8. Die mehrschichtige Struktur nach einem der Ansprüche 1-7, wobei die Polyamidzusammensetzung (A) weiter ein modifiziertes Polyolefin (A2) umfasst.

9. Die mehrschichtige Struktur nach einem der Ansprüche 1-8, wobei die Polyamidzusammensetzung (B) weiter ein Kohlenstoff-Nanoröhrchen (B4) umfasst.

10. Die mehrschichtige Struktur nach Anspruch 9, wobei der Gehalt des Kohlenstoff-Nanoröhrchens (B4) 1,5-10 Massenteile pro 100 Massenteile des Polyamids (B1) beträgt.

11. Die mehrschichtige Struktur nach einem der Ansprüche 1-10, welche in Form eines Rohrs, eines Schlauchs oder einer Rohrleitung vorliegt.

12. Die mehrschichtige Struktur nach einem der Ansprüche 1-11, welche zum Transport von Kraftstoff verwendet wird.

## Revendications

1. Structure multicouche comprenant une couche de polyamide (A) et une couche de polyamide (B), dans laquelle :
la couche de polyamide (A) est fabriquée à partir d'une composition de polyamide (A) comprenant au moins un polyamide (A1) choisi dans le groupe consistant en un polyamide (al) contenant au moins l'un ou l'autre d'un motif constitutif dérivé de lactame en C₁₀-C₁₂ et d'un motif constitutif dérivé d'acide aminocarboxylique en C₁₀-C₁₂, et un polyamide (a2) contenant un motif constitutif dérivé de diamine aliphatique en C₆-C₁₂ et un motif constitutif dérivé d'acide dicarboxylique aliphatique en C₁₀-C₁₂ ; et
la couche de polyamide (B) est fabriquée à partir d'une composition de polyamide (B) comprenant : un polyamide (B1) comprenant un motif de diamine contenant 70 % en moles ou plus d'un motif constitutif dérivé de xylylènediamine et un motif d'acide dicarboxylique contenant 70 % en moles ou plus d'un motif constitutif dérivé d'acide dicarboxylique aliphatique en C₄-C₁₂ ; une polyoléfine modifiée (B2) ; et au moins un polyamide (B3) choisi dans le groupe consistant en un polyamide (b1) contenant au moins l'un ou l'autre d'un motif constitutif dérivé de lactame en C₆-C₁₂ et d'un motif constitutif dérivé d'acide aminocarboxylique en C₆-C₁₂, et un polyamide (b2) contenant un motif constitutif dérivé de diamine aliphatique en C₆-C₁₂ et un motif constitutif dérivé d'acide dicarboxylique aliphatique en C₁₀-C₁₂, où la teneur en polyoléfine modifiée (B2) est de 5 à 15 parties en masse et la teneur en polyamide (B3) est de 5 à 20 parties en masse pour 100 parties en masse du polyamide (B1).

2. Structure multicouche selon la revendication 1, dans laquelle l'acide dicarboxylique aliphatique en C₄-C₁₂ est l'acide adipique, l'acide sébacique ou un mélange de ceux-ci.

3. Structure multicouche selon l'une ou l'autre des revendications 1 et 2, dans laquelle la xylylènediamine est la méta-xylylènediamine, la para-xylylènediamine ou un mélange de celles-ci.

4. Structure multicouche selon l'une quelconque des revendications 1 à 3, dans laquelle le polyamide (B1) est un polyxylylène adipamide, un polyxylylène sébacamide ou un mélange de ceux-ci.

5. Structure multicouche selon l'une quelconque des revendications 1 à 4, dans laquelle le polyamide (B1) est un mélange de polyxylylène adipamide et de polyxylylène sébacamide, où le rapport en masse du polyxylylène adipamide et du polyxylylène sébacamide (polyxylylène adipamide : polyxylylène sébacamide) est de 55:45 à 85:15.

6. Structure multicouche selon l'une quelconque des revendications 1 à 5, dans laquelle la polyoléfine modifiée (B2) est au moins une polyoléfine choisie dans le groupe consistant en le polyéthylène modifié par un anhydride maléique, un copolymère d'α-oléfine modifié par un anhydride maléique et une polyoléfine modifiée par greffage avec un polyamide aliphatique.

7. Structure multicouche selon l'une quelconque des revendications 1 à 6, dans laquelle le polyamide (B3) est au moins l'un choisi parmi le groupe consistant en polyamide 6, polyamide 6,12, polyamide 10,10, polyamide 11 et polyamide 12.

8. Structure multicouche selon l'une quelconque des revendications 1 à 7, dans laquelle la composition de polyamide (A) comprend en outre une polyoléfine modifiée (A2).

9. Structure multicouche selon l'une quelconque des revendications 1 à 8, dans laquelle la composition de polyamide (B) comprend en outre un nanotube de carbone (B4).

10. Structure multicouche selon la revendication 9, dans laquelle la teneur en nanotube de carbone (B4) est de 1,5 à 10 parties en masse pour 100 parties en masse de polyamide (B1).

11. Structure multicouche selon l'une quelconque des revendications 1 à 10, qui est sous une forme de tuyau, de flexible ou de tube.

12. Structure multicouche selon l'une quelconque des revendications 1 à 11, qui est utilisée pour le transport du carburant.
